# EUROPEAN PATENT APPLICATION

(11) **EP 4 213 003 A1**
(43) Date of publication of application: **19.07.2023**
(21) Application number: 21879217.4
(22) Date of filing: 22.09.2021
(51) Int. Cl.: G06F 3/0484, G06F 3/0488, G06F 9/48

(54) **STYLUS SWITCHING METHOD AND SYSTEM, AND STYLUS**

(30) Priority: 14.10.2020 CN 202011099585
(71) Applicant: Huawei Technologies Co., Ltd., Shenzhen, Guangdong 518129 (CN)
(72) Inventor: HAO, Yixiu, Shenzhen, Guangdong 518129 (CN); PENG, Bin, Shenzhen, Guangdong 518129 (CN); ZHANG, Hui, Shenzhen, Guangdong 518129 (CN); ZHANG, Jingjing, Shenzhen, Guangdong 518129 (CN); ZHU, Yuhong, Shenzhen, Guangdong 518129 (CN); WANG, Li, Shenzhen, Guangdong 518129 (CN); WU, Dongping, Shenzhen, Guangdong 518129 (CN)
(74) Representative: Epping - Hermann - Fischer
(86) International application number: PCT/CN2021/119686
(87) International publication number: WO 2022/078171

(57) **Abstract**

Embodiments of this application provide a stylus switching method and system, and a stylus. The system includes a first electronic device, a second electronic device, and the stylus. The stylus may be separately connected to the first electronic device and the second electronic device through Bluetooth. When the stylus is in contact with a screen of the first electronic device, the stylus sends both first radio frequency information and first pressure-sensitive information to the first electronic device, so that the first electronic device can display a corresponding track based on the first pressure-sensitive information and the first radio frequency information. When the stylus switches to the second electronic device, in other words, when the stylus is in contact with a screen of the second electronic device, the stylus sends second pressure-sensitive information and second radio frequency information to the second electronic device, so that the second electronic device can display a corresponding track based on the second pressure-sensitive information and the second radio frequency information. In this application, the stylus can freely switch between a plurality of electronic devices. Therefore, application scenarios of the stylus are diversified, and user experience is improved.

## Description

This application claims priority to Chinese Patent Application No. 202011099585.9, filed with the China National Intellectual Property Administration on October 14, 2020 and entitled "STYLUS SWITCHING METHOD AND SYSTEM, AND STYLUS", which is incorporated herein by reference in its entirety.

### TECHNICAL FIELD

Embodiments of this application relate to the field of touch control technologies, and in particular, to a stylus switching method and system, and a stylus.

### BACKGROUND

With development of touch control technologies, more electronic devices perform man-machine interaction in a touch control manner. In addition to being operated through touch by using a finger, a touchscreen of an electronic device may also be operated through touch by using a stylus.

A current stylus technology supports only a one-to-one scenario. In other words, a stylus can write only on one electronic device paired with the stylus. However, with development of communication technologies, a multielectronic device collaboration scenario is increasingly widely applied, but a current touch technology cannot support a stylus in freely switching between a plurality of electronic devices.

### SUMMARY

This application provides a stylus switching method and system, and a stylus, so that the stylus can be freely switched between a plurality of electronic devices.

According to a first aspect, an embodiment of this application provides a stylus switching system. In the switching system, a stylus may be connected to a first electronic device and a second electronic device through Bluetooth. The stylus is in contact with a screen of the first electronic device. For example, when a user holds the stylus to write on the first electronic device, the first electronic device may receive first radio frequency information and first pressure-sensitive information sent by the stylus. Correspondingly, the first electronic device may display a first track based on the received first radio frequency information and the received first pressure-sensitive information. The stylus is in contact with a screen of the second electronic device. For example, when the user switches the stylus from the first electronic device to the second electronic device to write, the second electronic device may receive second radio frequency information sent by the stylus, and the first electronic device may receive second pressure-sensitive information sent by the stylus. Then, the stylus may send the second pressure-sensitive information to the second electronic device. Correspondingly, the second electronic device may display a second track based on the received second radio frequency information and the received second pressure-sensitive information. In this way, after the stylus is switched from the first electronic device to the second electronic device, the stylus can send the second pressure-sensitive information and the second radio frequency information to the second electronic device, so that the second electronic device can display the corresponding track based on the second pressure-sensitive information and the second radio frequency information, and the stylus is switched between the first electronic device and the second electronic device.

For example, the system may further include a third electronic device. In an example, when writing on the first electronic device, the stylus may also switch to the third electronic device in the foregoing manner to write. In another example, after switching to the second electronic device to write, the stylus may switch to the third electronic device in the foregoing manner to write.

For example, in a process in which the stylus is in contact with the screen of the second electronic device, the stylus continuously sends the second radio frequency information while sending the second pressure-sensitive information, so that the second electronic device can receive the second pressure-sensitive information and the second radio frequency information, and display the corresponding track.

For example, the stylus sends pressure-sensitive information (including the first pressure-sensitive information or the second pressure-sensitive information) to the first electronic device and/or the second electronic device through Bluetooth.

For example, "writing" in this embodiment of this application may also be an operation such as tapping or dragging. According to the first aspect, after receiving the second pressure-sensitive information sent by the stylus, the first electronic device sends first event information to the stylus, where the first event information indicates that a transmitting end (namely, the first electronic device) of the first event information receives the second pressure-sensitive information, and does not receive radio frequency information sent by the stylus. After receiving the second radio frequency information sent by the stylus, the second electronic device sends second event information to the stylus, where the second event information indicates that a transmitting end (namely, the second electronic device) of the second event information receives the second radio frequency information, and does not receive pressure-sensitive information sent by the stylus. Then, the stylus may send the second pressure-sensitive information to the first electronic device and the second electronic device based on either of the received first event information and the received second event information. That is, after receiving the first event information, the second event information, or the first event information and the second event information, the stylus separately sends the second pressure-sensitive information to the first electronic device and the second electronic device. If the second electronic device has received the second radio frequency information, and further receives the second pressure-sensitive information sent by the stylus, the second electronic device may display the second track based on the received second pressure-sensitive information and the received second radio frequency information, and send third event information to the stylus, where the third event information indicates that a transmitting end (namely, the second electronic device) of the third event information receives the second pressure-sensitive information and the second radio frequency information. After receiving the third event information, the stylus sends the second pressure-sensitive information and the second radio frequency information only to the transmitting end, namely, the second electronic device, of the third event information. In this way, the first electronic device and the second electronic device can report different types of event information to the stylus based on a difference between the received pressure-sensitive information or the received radio frequency information. Correspondingly, the stylus can determine, based on the received different types of event information, an electronic device on which the stylus is currently writing, so that the stylus can be freely switched between a plurality of electronic devices.

For example, the first event information may arrive at the stylus earlier than the second event information. For example, the second event information may arrive at the stylus earlier than the first event information.

According to any one of the first aspect or the implementations of the first aspect, if the stylus does not receive the third event information within specified duration after sending the second pressure-sensitive information to the first electronic device and the second electronic device, the stylus stops sending the second pressure-sensitive information to the first electronic device and the second electronic device. In this way, power consumption of the stylus can be reduced.

According to any one of the first aspect or the implementations of the first aspect, the first electronic device is further configured to: send first event information to the stylus in response to the received second pressure-sensitive information, where the first event information indicates that a transmitting end of the first event information receives the second pressure-sensitive information, and does not receive radio frequency information sent by the stylus; the second electronic device is further configured to: send second event information to the stylus in response to the received second radio frequency information, where the second event information indicates that a transmitting end of the second event information receives the second radio frequency information, and does not receive pressure-sensitive information sent by the stylus; and the stylus is further configured to: send the second pressure-sensitive information to the second electronic device in response to the received first event information and the received second event information. In this way, after receiving the first event information and the second event information, the stylus can determine that the second electronic device that sends the second event information is the electronic device that the stylus is currently writing, and the stylus can send the pressure-sensitive information and the radio frequency information to the second electronic device, so that the second electronic device can display the corresponding track based on the received second pressure-sensitive information and the received second radio frequency information. That is, the stylus can be switched between the plurality of electronic devices without separately sending the pressure-sensitive information to the first electronic device and the second electronic device in a multicast manner. Power consumption of the stylus is reduced.

According to any one of the first aspect or the implementations of the first aspect, a first radio frequency parameter corresponding to the first radio frequency information sent by the stylus to the first electronic device is the same as a second radio frequency parameter corresponding to the second radio frequency information sent by the stylus to the second electronic device. In this way, the stylus in this application can be freely switched between the electronic devices having the same radio frequency parameter.

For example, screens (which may be referred to as displays or touchscreens) of the first electronic device and the second electronic device may be screens of an on cell type.

For example, the screens of the first electronic device and the second electronic device may be screens of an in cell type.

According to any one of the first aspect or the implementations of the first aspect, a first radio frequency parameter corresponding to the first radio frequency information sent by the stylus to the first electronic device is different from a second radio frequency parameter corresponding to the second radio frequency information sent by the stylus to the second electronic device. In this way, the stylus in this application can be freely switched between the electronic devices having the different radio frequency parameters.

For example, the first electronic device is a tablet.

For example, the second electronic device is a mobile phone.

According to any one of the first aspect or the implementations of the first aspect, the screen of the first electronic device is a screen of an on cell type, and the screen of the second electronic device is a screen of an in cell type. In this way, the stylus in this application can be switched between the electronic devices having different types of screens. For example, the screen may be referred to as a touchscreen, a display, or the like.

For example, the screens of the first electronic device and the second electronic device may be of a same type, for example, may be screens of the on cell type or screens of the in cell type.

According to any one of the first aspect or the implementations of the first aspect, the first radio frequency parameter includes at least one of the following: a working frequency of a first radio frequency signal carrying the first radio frequency information, a sending moment of the first radio frequency signal, and sending duration of the first radio frequency signal; and the second radio frequency parameter includes at least one of the following: a working frequency of a second radio frequency signal carrying the second radio frequency information, a sending moment of the second radio frequency signal, and sending duration of the second radio frequency signal.

For example, that the first radio frequency parameter is different from the second radio frequency parameter in this embodiment of this application may mean that the working frequency of the first radio frequency signal is different from the working frequency of the second radio frequency signal, the sending moment of the first radio frequency signal is different from the sending moment of the second radio frequency signal, and/or the sending duration of the first radio frequency signal is different from the sending duration of the second radio frequency signal.

According to any one of the first aspect or the implementations of the first aspect, the first electronic device is further configured to: display a first prompt box, where the first prompt box includes a first option; obtain a first user instruction, where the first user instruction is obtained by the first electronic device after the first electronic device detects that a user taps the first option; and send instruction information to the stylus in response to the first user instruction, so as to instruct the stylus to switch to the first electronic device; and the stylus is further configured to: send the second pressure-sensitive information to the first electronic device in response to the received instruction information. In this way, the user can manually switch the stylus back to the first electronic device.

For example, the first prompt box may be displayed in any area in an upper part, a middle part, or a bottom part of a display window of the first electronic device.

For example, after displaying the first prompt box, if the first electronic device obtains the first user instruction within specified duration (for example, three minutes), the first electronic device may cancel displaying of the first prompt box.

According to any one of the first aspect or the implementations of the first aspect, the second electronic device is configured to: display a second prompt box, where the second prompt box includes prompt information, and the prompt information is used to notify that the stylus has switched to the second electronic device. In this way, the user can be reminded of the electronic device on which the stylus can write.

For example, the second prompt box may be displayed in any area in an upper part, a middle part, or a bottom part of a display window of the second electronic device.

For example, the second electronic device cancels displaying of the first prompt box within specified duration (for example, three minutes) after displaying the second prompt box.

According to any one of the first aspect or the implementations of the first aspect, the first electronic device and the second electronic device have a same account.

According to a second aspect, an embodiment of this application provides a stylus switching system. The system includes a first electronic device, a second electronic device, and a stylus. The stylus is connected to the first electronic device through Bluetooth, and the stylus is connected to the second electronic device through Bluetooth. The first electronic device is configured to: receive first radio frequency information and first pressure-sensitive information sent by the stylus, where the first radio frequency information and the first pressure-sensitive information are generated when the stylus is in contact with a screen of the first electronic device; and display a first track based on the first radio frequency information and the first pressure-sensitive information. The first electronic device is configured to: receive second pressure-sensitive information sent by the stylus, where the second pressure-sensitive information is generated when the stylus is in contact with a screen of the second electronic device. The stylus is configured to send the second pressure-sensitive information and second radio frequency information to the second electronic device, where the second radio frequency information is generated when the stylus is in contact with the screen of the second electronic device. The second electronic device is configured to: display a second track based on the second radio frequency information and the second pressure-sensitive information. In this way, the stylus in this embodiment of this application can be freely switched between electronic devices having different radio frequency parameters. According to the second aspect, the first electronic device is configured to: send first event information to the stylus in response to the received second pressure-sensitive information, where the first event information indicates that a transmitting end of the first event information receives the second pressure-sensitive information, and does not receive radio frequency information sent by the stylus. The stylus is further configured to: send the second pressure-sensitive information and the second radio frequency information to the second electronic device in response to the received first event information. The second electronic device is further configured to: in response to the received second pressure-sensitive information and the received second radio frequency information, display the second track, and send third event information to the stylus, where the third event information indicates that a transmitting end of the third event information receives the second pressure-sensitive information and the second radio frequency information. According to any one of the second aspect or the implementations of the second aspect, the stylus is further configured to: if the stylus does not receive the third event information within specified duration after sending the second radio frequency information and the second pressure-sensitive information to the second electronic device, stop sending the second pressure-sensitive information and the second radio frequency information to the second electronic device. According to any one of the second aspect or the implementations of the second aspect, a first radio frequency parameter corresponding to the first radio frequency information is different from a second radio frequency parameter corresponding to the second radio frequency information.

According to any one of the second aspect or the implementations of the second aspect, the system further includes a third electronic device. The stylus is connected to the third electronic device through Bluetooth. The first electronic device is configured to send first event information to the stylus in response to the received second pressure-sensitive information, where the first event information indicates that a transmitting end of the first event information receives the second pressure-sensitive information and does not receive radio frequency information sent by the stylus. The stylus is further configured to: in response to the received first event information, send third radio frequency information to the second electronic device, and send the second pressure-sensitive information to the third electronic device. The third electronic device is configured to send first event information to the stylus in response to the received second pressure-sensitive information. The stylus is further configured to send the second pressure-sensitive information and the second radio frequency information to the second electronic device in response to the received first event information. The second electronic device is further configured to: in response to the received second pressure-sensitive information and the received second radio frequency information, display the second track, and send third event information to the stylus, where the third event information indicates that a transmitting end of the third event information receives the second pressure-sensitive information and the second radio frequency information. According to any one of the second aspect or the implementations of the second aspect, a third radio frequency parameter corresponding to the third radio frequency information is different from the first radio frequency parameter and the second radio frequency parameter.

According to any one of the second aspect or the implementations of the second aspect, the system further includes a third electronic device. The stylus is connected to the third electronic device through Bluetooth. The first electronic device is configured to send first event information to the stylus in response to the received second pressure-sensitive information, where the first event information indicates that a transmitting end of the first event information receives the second pressure-sensitive information and does not receive radio frequency information sent by the stylus. The stylus is further configured to separately send the second pressure-sensitive information to the first electronic device, the second electronic device, and the third electronic device in response to the received first event information. The first electronic device, the second electronic device, and the third electronic device are separately configured to send the first event information to the stylus in response to the received second pressure-sensitive information. The stylus is further configured to send the second pressure-sensitive information and the second radio frequency information to the second electronic device in response to the received first event information. The second electronic device is further configured to: in response to the received second pressure-sensitive information and the received second radio frequency information, display the second track, and send third event information to the stylus, where the third event information indicates that a transmitting end of the third event information receives the second pressure-sensitive information and the second radio frequency information.

According to any one of the second aspect or the implementations of the second aspect, a screen type of the third electronic device is the same as that of the first electronic device, and the screen type of the third electronic device is different from that of the second electronic device.

According to a third aspect, an embodiment of this application provides a stylus switching method. The method includes: A first electronic device receives first radio frequency information and first pressure-sensitive information sent by a stylus, where the first radio frequency information and the first pressure-sensitive information are generated when the stylus is in contact with a screen of the first electronic device. The first electronic device displays a first track based on the first radio frequency information and the first pressure-sensitive information. A second electronic device receives second radio frequency information sent by the stylus, where the second radio frequency information is generated when the stylus is in contact with a screen of the second electronic device. The first electronic device receives second pressure-sensitive information sent by the stylus, where the second pressure-sensitive information is generated when the stylus is in contact with the screen of the second electronic device. The stylus sends the second pressure-sensitive information to the second electronic device. The second electronic device displays a second track based on the second radio frequency information and the second pressure-sensitive information.

The third aspect and any implementation of the third aspect respectively correspond to the first aspect and any implementation of the first aspect. For technical effects corresponding to the third aspect and any implementation of the third aspect, refer to the technical effects corresponding to the first aspect and any implementation of the first aspect. Details are not described herein again.

According to a fourth aspect, an embodiment of this application provides a stylus switching method. The method includes: The first electronic device receives first radio frequency information and first pressure-sensitive information sent by the stylus, where the first radio frequency information and the first pressure-sensitive information are generated when the stylus is in contact with a screen of the first electronic device. The first electronic device displays a first track based on the first radio frequency information and the first pressure-sensitive information. The first electronic device receives second pressure-sensitive information sent by the stylus, where the second pressure-sensitive information is generated when the stylus is in contact with a screen of the second electronic device. The stylus sends the second pressure-sensitive information and second radio frequency information to the second electronic device, where the second radio frequency information is generated when the stylus is in contact with the screen of the second electronic device. The second electronic device displays a second track based on the second radio frequency information and the second pressure-sensitive information.

The fourth aspect and any implementation of the fourth aspect respectively correspond to the second aspect and any implementation of the second aspect.

According to a fifth aspect, an embodiment of this application provides a stylus switching method. The method includes: A stylus sends first radio frequency information and first pressure-sensitive information to a first electronic device, where the first radio frequency information and the first pressure-sensitive information are generated when the stylus is in contact with a screen of the first electronic device. The stylus sends second radio frequency information to a second electronic device, where the second radio frequency information is generated when the stylus is in contact with a screen of the second electronic device. The stylus sends second pressure-sensitive information to the first electronic device, where the second pressure-sensitive information is generated when the stylus is in contact with the screen of the second electronic device. If either first event information or second event information is received, the stylus sends the second pressure-sensitive information to the first electronic device and the second electronic device, where the first event information is sent by the first electronic device based on the received second pressure-sensitive information, and the second event information is sent by the second electronic device based on the received second radio frequency information. The stylus receives third event information sent by the second electronic device, where the third event information is sent by the second electronic device based on the received second pressure-sensitive information and the received second radio frequency information. The stylus sends the second pressure-sensitive information and the second radio frequency information only to the second electronic device based on the third event information.

The fifth aspect and any implementation of the fifth aspect respectively correspond to the first aspect and any implementation of the first aspect. For technical effects corresponding to the fifth aspect and any implementation of the fifth aspect, refer to the technical effects corresponding to the first aspect and any implementation of the first aspect. Details are not described herein again.

According to a sixth aspect, an embodiment of this application provides a stylus switching method. The method includes: A stylus sends first radio frequency information and first pressure-sensitive information to a first electronic device, where the first radio frequency information and the first pressure-sensitive information are generated when the stylus is in contact with a screen of the first electronic device. The stylus sends second radio frequency information to a second electronic device, where the second radio frequency information is generated when the stylus is in contact with a screen of the second electronic device. The stylus sends second pressure-sensitive information to the first electronic device, where the second pressure-sensitive information is generated when the stylus is in contact with the screen of the second electronic device. If receiving first event information and second event information, the stylus sends the second pressure-sensitive information to the second electronic device, where the first event information is sent by the first electronic device based on the received second pressure-sensitive information, and the second event information is sent by the second electronic device based on the received second radio frequency information.

The sixth aspect and any implementation of the sixth aspect respectively correspond to the first aspect and any implementation of the first aspect. For technical effects corresponding to the sixth aspect and any implementation of the sixth aspect, refer to the technical effects corresponding to the first aspect and any implementation of the first aspect. Details are not described herein again.

According to a seventh aspect, an embodiment of this application provides a stylus switching method. The method includes: A stylus sends first radio frequency information and first pressure-sensitive information to a first electronic device, where the first radio frequency information and the first pressure-sensitive information are generated when the stylus is in contact with a screen of the first electronic device. The stylus sends second pressure-sensitive information to the first electronic device, where the second pressure-sensitive information is generated when the stylus is in contact with a screen of the second electronic device. The stylus sends the first radio frequency information to the second electronic device. The stylus receives first event information sent by the first electronic device, and sends the second pressure-sensitive information and second radio frequency information to the second electronic device, where the first event information indicates that a transmitting end of the first event information receives the second pressure-sensitive information and does not receive radio frequency information sent by the stylus, and the second event information indicates that a transmitting end of the second event information receives the second radio frequency information and does not receive pressure-sensitive information sent by the stylus.

The seventh aspect and any implementation of the seventh aspect respectively correspond to the second aspect and any implementation of the second aspect.

According to an eighth aspect, an embodiment of this application provides a stylus. The stylus includes a memory and a processor. The processor is coupled to the memory. The memory stores program instructions, and when the program instructions are executed by the processor, the stylus is enabled to perform the stylus switching method according to any one of the fifth aspect or the implementations of the fifth aspect, or the stylus switching method according to any one of the sixth aspect or the implementations of the sixth aspect, or the stylus switching method according to any one of the seventh aspect and the implementations of the seventh aspect.

According to a ninth aspect, a computer-readable storage medium is provided. The medium includes a computer program, and when the computer program runs on a stylus, the stylus is enabled to perform the stylus switching method according to any one of the fifth aspect or the implementations of the fifth aspect, or the stylus switching method according to any one of the sixth aspect or the implementations of the sixth aspect, or the stylus switching method according to any one of the seventh aspect and the implementations of the seventh aspect.

### BRIEF DESCRIPTION OF DRAWINGS

FIG. 1 is a schematic diagram of an application scenario according to an embodiment of this application;
FIG. 2 is a schematic diagram of an example of a structure of an electronic device;
FIG. 3 is a schematic diagram of an example of a software structure of an electronic device;
FIG. 4 is a schematic diagram of a communication connection between an electronic device and a stylus according to an embodiment of this application;
FIG. 5 is a schematic diagram of an example of data exchange between a stylus and an electronic device with a touchscreen of an in cell type;
FIG. 6 is a schematic diagram of an example of data exchange between a stylus and an electronic device with a touchscreen of an on cell type;
FIG. 7 is an example of a principle of using a stylus on an electronic device;
FIG. 8 is a schematic diagram of a principle of a stylus switching method according to an embodiment of this application;
FIG. 9A and FIG. 9B are a schematic diagram of an example of establishing a Bluetooth connection between a stylus and an electronic device;
FIG. 10 is a schematic diagram of an example of a Bluetooth interface;
FIG. 11 is a schematic flowchart 1 of a stylus switching method according to an embodiment of this application;
FIG. 12a to FIG. 12c each are a schematic diagram of an example of Bluetooth data exchange between a stylus and electronic devices;
FIG. 13a to FIG. 13d each are a schematic diagram of an example of a format of Bluetooth information;
FIG. 14 is a schematic diagram of an example of an application scenario;
FIG. 15 is a schematic flowchart 1 of a stylus switching method according to an embodiment of this application;
FIG. 16 is a schematic flowchart 1 of a stylus switching method according to an embodiment of this application;
FIG. 17 is a schematic diagram of an example of an application scenario;
FIG. 18 is a schematic flowchart 1 of a stylus switching method according to an embodiment of this application;
FIG. 19 is a schematic diagram of an example of an application scenario;
FIG. 20a and FIG. 20b each are a schematic flowchart 1 of a stylus switching method according to an embodiment of this application;
FIG. 21 is a schematic diagram of an example of an application scenario;
FIG. 22a to FIG. 22c each are a schematic flowchart 1 of a stylus switching method according to an embodiment of this application;
FIG. 23 is a schematic diagram 1 of an example of a user interface;
FIG. 24 is a schematic diagram 1 of an example of a user interface;
FIG. 25 is a schematic flowchart 1 of a stylus switching method according to an embodiment of this application;
FIG. 26 is a schematic flowchart 1 of a stylus switching method according to an embodiment of this application;
FIG. 27 is a schematic flowchart 1 of a stylus switching method according to an embodiment of this application;
FIG. 28A and FIG. 28B are a schematic flowchart 1 of a stylus switching method according to an embodiment of this application; and
FIG. 29A and FIG. 29B are a schematic flowchart 1 of a stylus switching method according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, and a second target object are used to distinguish between different target objects, but are not used to describe a particular order of the target objects.

In embodiments of this application, the words "example" or "for example" are used to represent giving an example, an illustration, or a description. Any embodiment or design scheme described as an "example" or with "for example" in embodiments of this application should not be explained as being more preferable or having more advantages than another embodiment or design scheme. Exactly, use of the terms such as "for example" or "example" is intended to present a related concept in a specific manner.

In the description of embodiments of this application, unless otherwise stated, "a plurality of" means two or more than two. For example, a plurality of processing units are two or more processing units, and a plurality of systems are two or more systems.

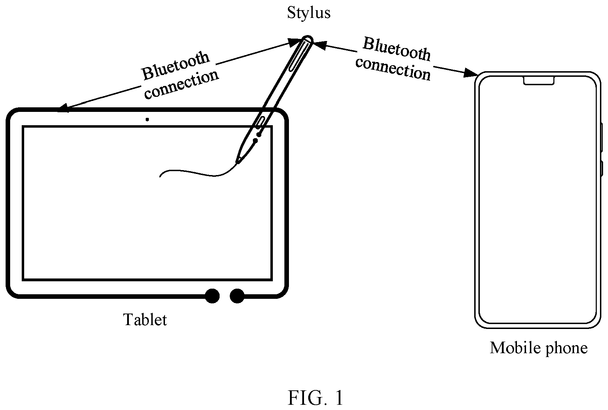

Before the technical solutions in embodiments of this application are described, an application scenario in embodiments of this application is first described with reference to the accompanying drawings. FIG. 1 is a schematic diagram of an application scenario according to an embodiment of this application. The application scenario includes a stylus, a tablet, and a mobile phone. For example, the stylus may exchange data with the tablet and the mobile phone over a Bluetooth network. It should be noted that in actual application, there may be one or more styluses, tablets, and mobile phones. A quantity of devices in FIG. 1 is merely an example, and is not limited in this application.

In this embodiment of this application, descriptions are provided by using only a scenario of switching the stylus between the tablet and the mobile phone as an example. In another embodiment, this application is applicable to a stylus and an electronic device having a touchscreen, such as a tablet, a mobile phone, a smart large screen, a notebook computer, or a wearable device, for example, the stylus may be switched between two tablets, or may be switched between a tablet and a mobile phone. This is not limited in this application.

In this embodiment of this application, the stylus may also be referred to as an active stylus, a stylus pen, or a Bluetooth stylus.

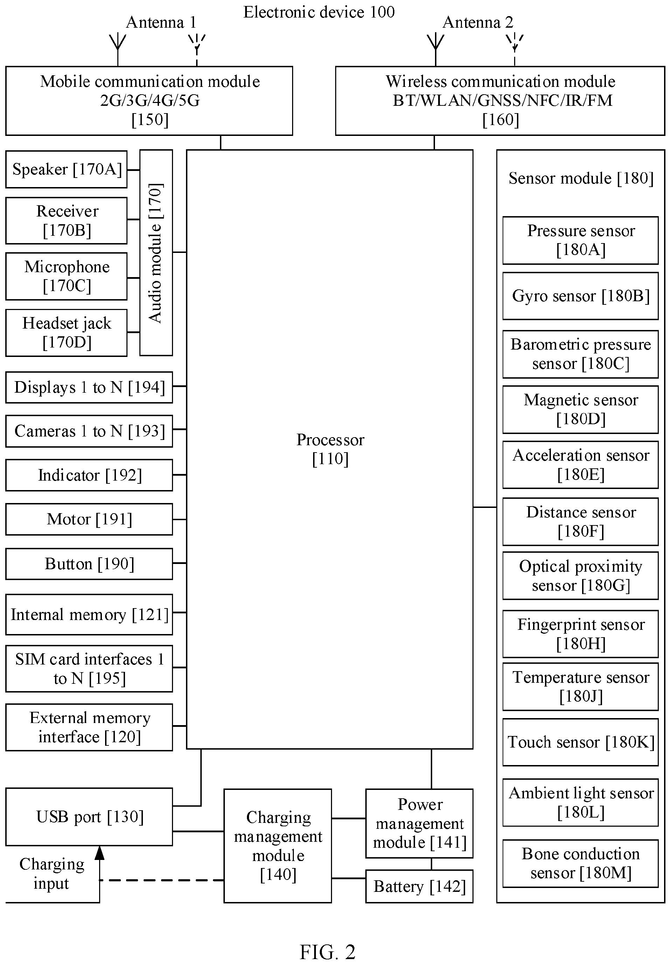

FIG. 2 is a schematic diagram of a structure of an electronic device according to an embodiment of this application. For example, the structure of the electronic device in FIG. 2 is applicable to the tablet and the mobile phone in FIG. 1. As shown in FIG. 2, the electronic device 100 may include a processor 110, an external memory interface 120, an internal memory 121, a USB port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset interface 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural network processing unit (neural network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

A memory may be disposed in the processor 110, and is configured to store instructions and data. In some embodiments, the memory in the processor 110 is a cache memory. The memory may store instructions or data that are just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB port 130 is a port that conforms to a USB standard specification, and may be specifically a mini USB port, a micro USB port, a USB Type-C port, or the like; and may support various USB specifications including USB 1.0, USB 2.0, USB 3.0, and USB 4.0 or higher USB specifications. For example, the USB port 130 may include one or more USB ports.

It may be understood that an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The power management module 141 is configured to connect the battery 142 and the charging management module 140 to the processor 110. A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same component as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a photographing function by using the ISP, the camera 193, the video codec, the GPU, the display 194, the application processor, and the like.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The electronic device 100 may implement an audio function, such as music playing or recording by using the audio module 170, the speaker 170A, the receiver 170B, the microphone 170C, the headset jack 170D, the application processor, and the like.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

FIG. 2 is a block diagram of a software structure of the electronic device 100 according to this embodiment of this application.

In the layered architecture of the electronic device 100, software is divided into several layers, and each layer has a clear role and task. The layers communicate with each other through a software interface. In some embodiments, the Android system is divided into five layers: an application layer, a system framework layer, a hardware abstraction layer (Hardware Abstraction Layer, HAL), and a kernel layer from top to bottom.

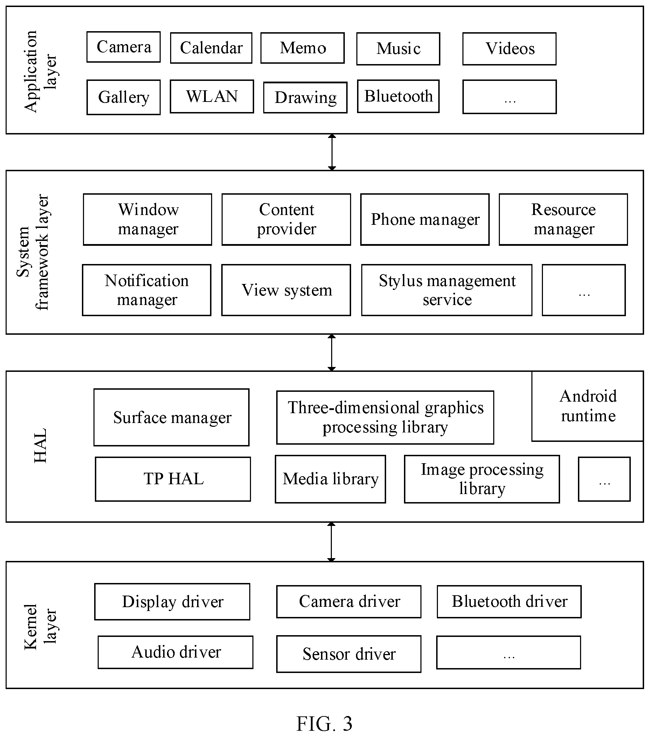

The application layer may include applications such as Camera, Gallery, Calendar, Memo, WLAN, Music, Videos, and Drawing. It should be noted that an application included in the application layer shown in FIG. 3 is merely an example for description. This is not limited in this application. It may be understood that the application included in the application layer does not constitute a specific limitation on the electronic device 100. In some other embodiments of this application, the electronic device 100 may include more or fewer applications than the applications included in the application layer shown in FIG. 3, or the electronic device 100 may include totally different applications.

The system framework layer provides an application programming interface (Application Programming Interface, API) and a programming framework for the application at the application layer, and includes various components and services to support Android development. The system framework layer includes some predefined functions. As shown in FIG. 3, the system framework layer may include a view system, a window manager, a resource manager, a content provider, and the like. The view system includes a visual control, for example, a control for displaying a text or a control for displaying a picture. The view system may be configured to construct an application. A display interface may include one or more views. The window manager is configured to manage a window program. The window manager may obtain a size of a display, determine whether there is a status bar, perform screen locking, perform screen capture, and the like. The resource manager provides various resources such as a localized character string, an icon, a picture, a layout file, and a video file for an application. The content provider is configured to store and obtain data, and enable the data to be accessed by an application. The data may include a video, an image, audio, and the like. A stylus management service may also be referred to as a stylus pen management service, and is configured to manage a stylus connected to the electronic device, including controlling a connection to or a disconnection from the stylus, and the like.

The HAL may include a plurality of function modules, such as a browser kernel, 3D graphics library (such as OpenGL ES), and font library. The browser kernel is responsible for interpreting web page syntax (for example, an application HTML or JavaScript in a standard general markup language) and rendering (displaying) a web page. The 3D graphics library is configured to implement three-dimensional graphics drawing, image rendering, composition, layer processing, and the like. The font library is used to implement inputs of different fonts. Android runtime includes a kernel library and a virtual machine. The Android runtime is responsible for scheduling and management of the Android system. The kernel library includes two parts: a function that needs to be invoked in a Java language and a kernel library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The HAL further includes a TP (Touchpad, touchscreen) HAL, configured to perform corresponding processing on data (for example, a pressure parameter below) reported by a sensor driver.

The kernel layer is a layer between hardware and software. The kernel layer includes at least a display driver, a camera driver, an audio driver, a sensor driver and a Bluetooth driver.

It may be understood that components included in each software layer shown in FIG. 3 do not constitute a specific limitation on the electronic device 100. In some other embodiments of this application, the electronic device 100 may include more or fewer components than those shown in the figure, some components may be combined, or some components may be split, or there may be a different component layout.

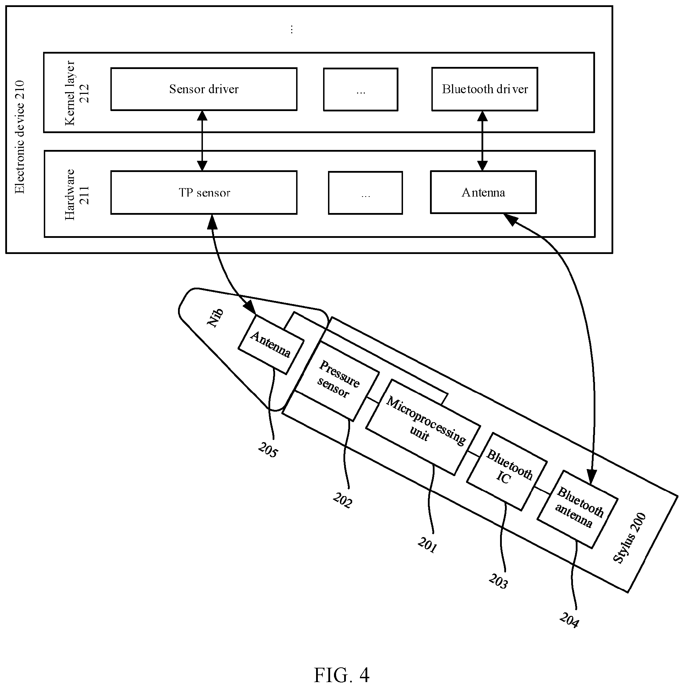

FIG. 4 is a schematic diagram of a communication connection between an electronic device and a stylus according to an embodiment of this application. As shown in FIG. 4, the stylus 200 includes but is not limited to components such as a microcontroller unit (microcontroller unit, MCU) 201, a pressure sensor 202, a Bluetooth integrated circuit (integrated circuit, IC) 203, a Bluetooth antenna 204, and an antenna 205. It may be understood that FIG. 4 shows the components included in the stylus 200, but does not constitute a specific limitation on the stylus 200. In some other embodiments of this application, the stylus 200 may include more or fewer components than those shown in the figure, or some components may be combined, or some components may be split, or there may be a different component layout.

Optionally, the pressure sensor 202 is configured to: obtain a pressure parameter, for example, after a nib of the stylus is in contact with an object (for example, a touchscreen), the pressure sensor 202 may obtain the corresponding pressure parameter based on applied pressure; and report the pressure parameter to the MCU 201. Optionally, the pressure parameter may also be referred to as pressure data, pressure information, or the like. This is not limited in this application.

Optionally, the MCU 201 is configured to perform corresponding processing on the pressure parameter received from the pressure sensor 202. The MCU 201 has an "always on (always on)" feature, and can ensure normal running of a sensor with very low power consumption. It should be noted that the MCU 201 is merely an example, and another component that can function as a processor or a microcontroller may be an alternative of the MCU.

Optionally, the MCU 201 is further configured to control the Bluetooth antenna 204 to output a pressure-sensitive signal, where the pressure-sensitive signal indicates the pressure parameter obtained by the MCU 201 from the pressure sensor 202. For example, the MCU 201 may generate the pressure-sensitive signal based on the pressure parameter obtained from the pressure sensor 202, and output the pressure-sensitive signal to the electronic device 210 via the Bluetooth IC 203 and the Bluetooth antenna 204. Correspondingly, an antenna (for example, the antenna 2 in FIG. 1) in the electronic device 210 may obtain the corresponding pressure parameter based on the received pressure-sensitive signal, and transmit the obtained pressure parameter to a Bluetooth driver. The Bluetooth driver continues to report the pressure parameter to an upper-layer module (for example, a TP HAL). The upper-layer module may perform corresponding processing on the pressure parameter.

Optionally, the MCU 201 is further configured to receive and process data from the antenna 205. For example, the antenna 205 may be located on a nib side of the electronic device. For example, the antenna 205 may also be referred to as a "nib antenna". When the nib of the stylus 200 approaches a screen of the electronic device, the antenna 205 of the stylus may receive a detection signal sent by a TP sensor in the electronic device 210, and output the detection signal to the MCU 201. The MCU 201 may control, based on the received detection signal, the antenna 205 to output a square wave signal (the square wave signal may also be referred to as a touch signal, a trigger signal, a touch control signal, or the like) with a specified frequency (which may be referred to as a radio frequency). This is not limited in this application. Correspondingly, the electronic device 210 may determine, based on the square wave signal received by the TP sensor, a specific position of the nib of the stylus 200 on the touchscreen of the electronic device. Optionally, the antenna 205 may include an antenna 1 and an antenna 2. For example, the antenna 1 is configured to transmit a square wave signal, and the antenna 2 is configured to receive a detection signal and transmit a square wave signal. Frequencies of square wave signals transmitted by the antenna 1 and the antenna 2 may be the same or different. Optionally, the MCU 201, the pressure sensor 202, the Bluetooth IC 203, and the Bluetooth antenna 204 may be integrated into a same chip, or may be separate components, and are connected through a bus.

In some embodiments, the stylus in this application may also exchange data with an electronic device such as an electronic device by using another short-range wireless technology, for example, a Wi-Fi technology or another short-range wireless communication technology such as an ultra wide band (Ultra Wide Band, UWB). It may be understood that, when the pressure-sensitive information or the square wave signal is transmitted between the stylus 200 and the electronic device by using a Wi-Fi technology, the stylus 200 and the electronic device each have a Wi-Fi module. The following describes in detail a data exchange manner between an antenna (for example, the antenna 205) of the stylus and the TP sensor. For example, a stylus profile (pencil profile, PP), for example, a huawei stylus profile (huawei pencil profile, HPP) 3.0 regulates a frequency corresponding to a touchscreen and timeslot allocation for interaction between a touchscreen of an on cell type and a touchscreen of an in cell type. The touchscreen of the in cell type indicates embedding a touch panel function into a liquid crystal pixel, and is usually integrated with a liquid crystal layer. The touchscreen of the on cell type indicates that the touchscreen is embedded between a color filter substrate and a polarizer of a display, that is, a touch sensor is configured on a liquid crystal panel. The following separately describes data exchange between electronic devices with the two types of touchscreens and the stylus.

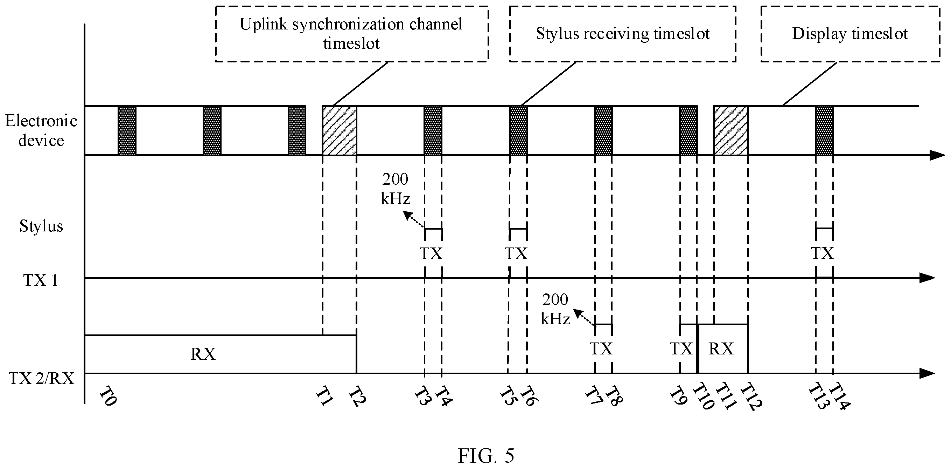

FIG. 5 is a schematic diagram of data exchange between the stylus and the electronic device with the touchscreen of the in cell type. Refer to FIG. 5. Timeslots on an electronic device side include an uplink synchronization channel timeslot, a display timeslot, and a receiving timeslot. The uplink synchronization signal timeslot is used to send an uplink synchronization signal. For example, the electronic device side periodically sends an uplink signal in the uplink synchronization channel timeslot. In an example, when no stylus is detected, the uplink synchronization signal sent on the electronic device side may be referred to as a detection signal, which is used to align a clock of the stylus with clock information on the electronic device side, and further used to trigger the stylus, based on a clock signal obtained after alignment and information such as a frequency of a square wave signal, an interval between sending timeslots corresponding to square wave signals, a width of a sending timeslot, or a quantity of sending timeslots in one period, to output the square wave signal. In another example, when the electronic device exchanges a signal with the stylus, the uplink synchronization signal sent on the electronic device side may be referred to as a synchronization signal, and is used to calibrate the clock of the stylus and the clock information of the electronic device side.

It should be noted that the information such as the frequency of the square wave signal, the interval between the sending timeslots corresponding to the square wave signals, the width of the sending timeslot, or the quantity of sending timeslots in one period may be collectively referred to as a radio frequency parameter. The radio frequency parameter is, in a process of Bluetooth pairing between the stylus and the electronic device, or after Bluetooth pairing is completed, sent by the electronic device to the stylus through a Bluetooth connection to the stylus. A touch control operation can be implemented between the electronic device and the electronic device only after radio frequency parameter protocols between the electronic device and the stylus are consistent. Content related to Bluetooth pairing is described in detail below.

FIG. 5 is used as an example. The frequency of the square wave signal is a frequency corresponding to a square wave signal output by the stylus, or may be understood as a frequency corresponding to a square wave signal that can be received by a TP sensor in the electronic device. It should be noted that, the frequency of the square wave signal that can be received by the TP sensor in the electronic device is set by a manufacturer of the electronic device. Generally, the frequency is set based on hardware performance of the touchscreen of the electronic device. For example, the frequency of the square wave signal that can be received by the TP sensor in the electronic device is any frequency value in a frequency range of 100 kHz to 400 kHz. For example, the frequency that can be received by the electronic device shown in FIG. 5 is 200 kHz, and the frequency of the square wave signal sent by the corresponding stylus (including TX 1 and TX 2/RX) is also 200 kHz. For example, the sending timeslot corresponding to the square wave signal is a timeslot in which the stylus can send the square wave signal, for example, a moment T3 to a moment T4 or a moment T5 to a moment T6 in FIG. 5. The interval between the sending timeslots is an interval between two adjacent sending timeslots, for example, the moment T4 to the moment T5 and the moment T6 to a moment T7 in FIG. 5. The width of the sending timeslot is duration in which the stylus can send square wave signals in each sending timeslot, for example, duration occupied by the moment T3 to the moment T4. The quantity (which may be represented by n) of sending timeslots in one period is a quantity of sending timeslots in one period (for example, a moment T1 to a moment T 10). For example, the quantity of sending timeslots in one period in FIG. 5 is 4 (including the moment T3 to the moment T4, the moment T5 to the moment T6, the moment T7 to a moment T8, and a moment T9 to the moment T10).

Refer to FIG. 5. For example, the stylus continuously monitors (for example, at a moment T0 to the moment T1), through an antenna 2 (corresponding to TX 2/RX), whether a detection signal sent by the electronic device (which is specifically the TP sensor in the electronic device) is received. For example, the TP sensor in the electronic device sends the detection signal in the uplink synchronization channel timeslot (namely, the moment T1 to a moment T2). As described above, the stylus continuously monitors whether the detection signal from the electronic device is received. At the moment T1 to the moment T2, the stylus receives the detection signal from the TP sensor through the antenna 2. When receiving the detection signal broadcast by the electronic device, for example, an uplink synchronization signal, the stylus can implement data synchronization with the electronic device, for example, align the clock of the stylus with the clock information on the electronic device side, and start to output the square wave signal based on the stored information such as the interval between the sending timeslots corresponding to the square wave signals, the width of the sending timeslot, or the quantity of sending timeslots in one period.

For example, the display timeslot is used to display an image.

For example, the receiving timeslot on the electronic device side is used to receive the square wave signal sent by the stylus. Still refer to FIG. 5. For example, after the stylus receives the detection signal, the stylus may send the square wave signal in the corresponding sending timeslot, for example, at the moment T3 to the moment T4, the moment T5 to the moment T6, the moment T7 to the moment T8, or the moment T9 to the moment T 10 based on the agreed radio frequency parameter such as the frequency of the square wave signal, the interval between the sending timeslots corresponding to the square wave signals, the width of the sending timeslot, or the quantity of sending timeslots in one period.

It should be noted that sending timeslots of square wave signals of TX 1 and TX/RX use a time division multiplexing manner, and T1 and TX/RX send square wave signals with a same frequency at different moments. As shown in FIG. 5, for example, an antenna 1 (namely, TX 1) sends square wave signals at the moment T3 to the moment T4 and the moment T5 to the moment T6, and the antenna 2 (namely, TX 2/RX) sends square wave signals at the moment T7 to the moment T8 and the moment T9 to the moment T10. Timeslot allocation of sending timeslots of TX 1 and TX 2/RX in FIG. 5 is merely an example. This is not limited in this application.

Still refer to FIG. 5. It is assumed that T1 to T10 are one period. After this period ends, the stylus monitors, in the receiving timeslot, the synchronization signal sent by the electronic device. Correspondingly, the TP sensor sends the synchronization signal at a moment T 11 to a moment T 12, the stylus receives the synchronization signal at the moment T 11 to the moment T 12 in the receiving timeslot (the moment T 10 to the moment T 12) through the antenna 2 (namely, TX/RX), and the stylus may correct, based on the synchronization signal, a clock signal and a position (namely, a corresponding moment) of each sending timeslot in the current period. In addition, the stylus sends the square wave signal in a sending timeslot (for example, a moment T13 to a moment T 14) on TX 1 or TX 2 based on specified timeslot allocation.

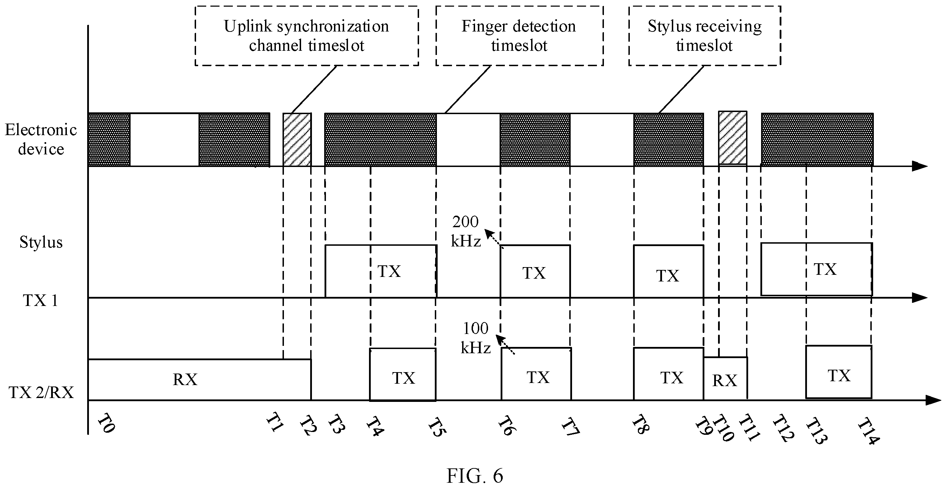

It should be noted that lengths and distribution of timeslots in FIG. 5 (and FIG. 6 below) are merely examples, and are not limited in this application. For example, widths (namely, occupied duration) of sending timeslots on TX 1 and TX 2/RX may be greater than widths of receiving timeslots on the electronic device side, to increase a success rate of receiving the square wave signal.

FIG. 6 is a schematic diagram of data exchange between the stylus and the electronic device with the touchscreen of the on cell type. Refer to FIG. 6. For example, a channel on an electronic device side includes an uplink synchronization channel timeslot, a finger detection timeslot, and a receiving timeslot. The finger detection timeslot is used to detect an operation performed by a finger of a user on the touchscreen. For descriptions of other timeslots, refer to FIG. 5. Details are not described herein again.

Still refer to FIG. 6. For descriptions of a moment T0 to a moment T2, refer to FIG. 5. Different from that in FIG. 5, TX 1 and TX 2/RX in FIG. 6 send square wave signals in a frequency division manner, in other words, TX 1 and TX 2/RX may send square wave signals with different frequencies in a same sending timeslot (for example, a moment T4 to a moment T5 and a moment T6 to a moment T7). For example, TX 1 sends a square wave signal whose frequency is 200 kHz in each sending timeslot (for example, the moment T4 to the moment T5, the moment T6 to the moment T7, or a moment T8 to a moment T9), and TX 2/RX sends a square wave signal whose frequency is 100 kHz in each sending timeslot. For example, after the TX 2/RX detects, through monitoring, a detection signal sent by the electronic device, an antenna 1 (corresponding to TX 1) may send a square wave signal at a moment T3, and an antenna 2 (corresponding to TX 2/RX) sends a square wave signal at the moment T4. In other words, the antenna 1 sends the square wave signal to the electronic device earlier than the antenna 2. Correspondingly, because the square wave signal sent by the antenna 1 may arrive on the electronic device side earlier than the square wave signal from the antenna 2, the electronic device may determine, based on arrival time of square wave signals, that a transmit antenna corresponding to a first received square wave signal is the antenna 1 of the stylus, and a transmit antenna corresponding to a later received square wave signal is the antenna 2 of the stylus.

It should be noted that the square wave signal described in this embodiment of this application is merely an example. In another embodiment, a signal output by the antenna (for example, the antenna 205) of the stylus may alternatively be a sine wave signal, a triangular wave signal, or the like. This is not limited in this application.

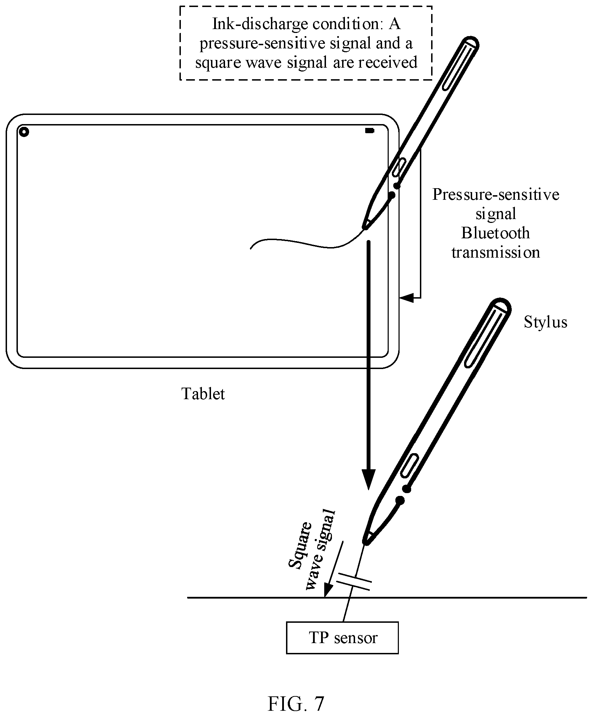

It should be further noted that, as described above, the radio frequency parameter (including the information such as the frequency of the square wave signal, the interval between the sending timeslots corresponding to the square wave signals, the width of the sending timeslot, and the quantity of sending timeslots in one period) corresponding to the electronic device is set before delivery, that is, when the stylus outputs the square wave signal, if any radio frequency parameter of the information such as a frequency of a square wave signal output by the stylus, an interval between sending timeslots corresponding to square wave signals, a width of a sending timeslot, or a quantity of sending timeslots in one period is inconsistent with the radio frequency parameter corresponding to the electronic device, the electronic device cannot receive the square wave signal sent by the stylus. For example, it is assumed that a radio frequency parameter corresponding to an electronic device A is as follows: a frequency of a square wave signal is 100 kHz, a width of a sending timeslot is 3 ms, an interval between sending timeslots is 1 ms, and a quantity of sending timeslots in one period is 6. A stylus completes Bluetooth pairing with another electronic device (an electronic device B), and obtains a radio frequency parameter corresponding to the electronic device B as follows: a frequency of a square wave signal is 200 kHz, a width of a sending timeslot is 3 ms, an interval between sending timeslots is 3 ms, and a quantity of sending timeslots in one period is 4. For example, a nib of the stylus approaches the electronic device A, and receives a detection signal sent by the electronic device A (for specific details, refer to the descriptions in FIG. 5 or FIG. 6). In response to the received detection signal, the stylus starts to send a square wave signal based on the radio frequency parameter corresponding to the electronic device B. However, because a frequency of the square wave signal sent by the stylus, an interval between sending timeslots, and a quantity of sending timeslots in one period are different from the radio frequency parameter corresponding to the electronic device A, for example, a TP sensor in the electronic device A scans the square wave signal only on the 100 kHz frequency band, for the TP sensor in the electronic device A, the square wave signal of 200 kHz sent by the stylus is an interference signal in another frequency band. In addition, FIG. 5 is used as an example. It is assumed that the radio frequency parameter corresponding to the electronic device A indicates that the stylus needs to send the square wave signal at the moment T3 to the moment T4, but the stylus sends the radio frequency parameter at the moment T4 to the moment T5 based on the radio frequency parameter corresponding to the electronic device B. Because the electronic device A does not have a corresponding receiving timeslot at the moment T4 to the moment T5, the electronic device A cannot receive the square wave signal sent by the stylus. In conclusion, a condition on which the electronic device can receive the square wave signal from the stylus is that the nib of the stylus approaches a screen of the electronic device to form a capacitive path (the details are described in FIG. 7). The radio frequency parameter corresponding to the square wave signal sent by the stylus is consistent with the radio frequency parameter corresponding to the touchscreen (which is specifically the TP sensor) of the electronic device.

To make a person skilled in the art better understand the technical solutions in embodiments of this application, the following describes a principle of using a stylus on an electronic device by using an example in which the electronic device is a tablet. For example, refer to FIG. 7. A condition for displaying writing handwriting (briefly referred to as an ink-discharge condition) on a tablet side is that a pressure-sensitive signal and a square wave signal are received. In other words, when receiving the pressure-sensitive signal and the square wave signal, the tablet displays, at a same moment, a corresponding track based on the received pressure-sensitive signal and the received square wave signal. The displayed track may also be referred to as "ink-discharge" .

For example, still refer to FIG. 7. There is an insulation material, for example, air or glass, between a nib of the stylus and an electrode of a TP sensor in the tablet. The insulation material is equivalent to a small capacitor. After the stylus receives, through the connection circuit, a detection signal sent by the TP sensor, the stylus may output a high-voltage (>20 Vp-p (peak-to-peak value)) square wave signal with a specified frequency in a sending timeslot. The TP sensor may receive, on the capacitive channel, the square wave signal output by an antenna of the stylus. For example, when the nib is close to the TP sensor (for example, 2 cm (centimeters)), air between the TP sensor and the nib may be equivalent to the capacitor, to form the transmission channel. Therefore, when a distance between the TP sensor and the nib (specifically, an antenna 1 and an antenna 2 on a nib side) of the stylus is within a specific range (for example, 0 cm to 2 cm), the channel may be formed between the TP sensor and the nib, so that the TP sensor can receive, on the channel, the square wave signal output by the nib (the antenna 1 and/or the antenna 2) of the stylus. Correspondingly, the tablet may determine, based on the received pressure-sensitive signal and the received square wave signal, that the ink-discharge condition is met, and display the track.

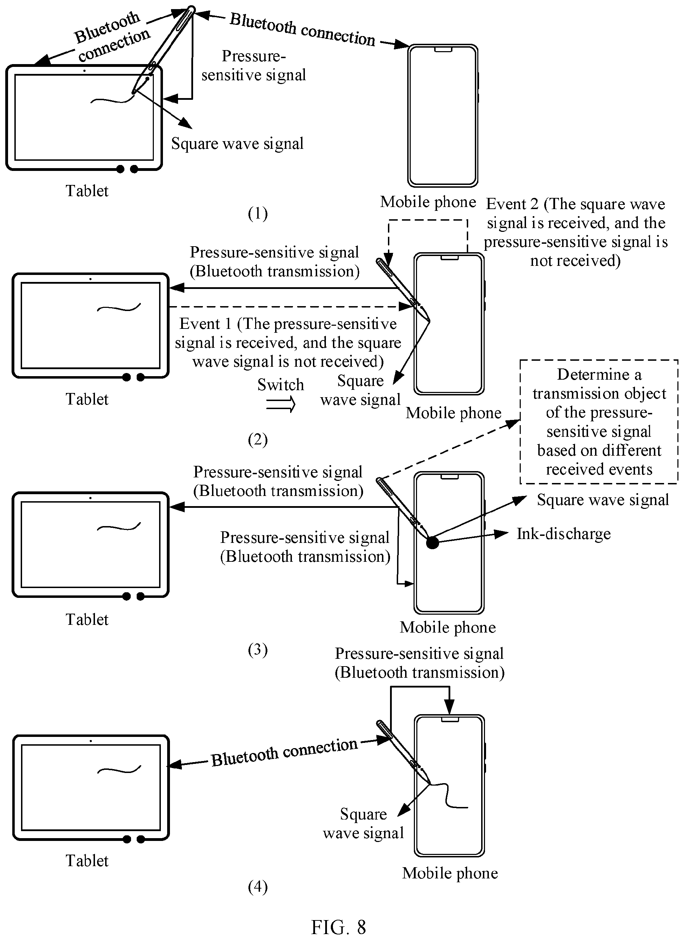

FIG. 8 is a schematic diagram of a principle of a stylus switching method according to an embodiment of this application. Refer to (1) in FIG. 8 ((1) in FIG. 8). Specifically, in a scenario in which a stylus writes on a tablet, a primary device of the stylus is the tablet, that is, a pressure-sensitive signal of the stylus is output to the tablet, and the tablet may display a track on a screen of the tablet based on the received pressure-sensitive signal and a received square wave signal that are sent by the stylus. For example, the tablet displays, at a position at which the tablet receives the square wave signal on the touchscreen, the track based on the received pressure-sensitive signal.

Refer to (2) in FIG. 8. The stylus is switched from the tablet to a mobile phone to write. Because the stylus does not sense the switching, and correspondingly, the pressure-sensitive signal of the stylus is still sent to the current primary device (namely, the tablet), the tablet receives only the pressure-sensitive signal, and does not receive the square wave signal. Correspondingly, the tablet sends an event 1 to the stylus, to indicate that the tablet receives the pressure-sensitive signal and does not receive the square wave signal. For example, the stylus writes on the mobile phone, and the mobile phone may obtain the square wave signal output by the stylus, and does not receive the pressure-sensitive signal. Correspondingly, the mobile phone sends an event 2 to the stylus, to indicate that the mobile phone receives the square wave signal, and does not receive the pressure-sensitive signal.

Refer to (3) in FIG. 8. For example, the stylus may enable a multicast mode based on the received event 1, the received event 2, or the received event 1 and the received event 2, that is, separately send, in a multicast manner, the pressure-sensitive signal to electronic devices (including the tablet and the mobile phone) connected to the stylus. Correspondingly, because the mobile phone side receives the square wave signal and the pressure-sensitive signal, the mobile phone determines that an ink-discharge condition is met, and the mobile phone may display a track on a screen based on the received pressure-sensitive signal and the received square wave signal.

Refer to (4) in FIG. 8. The stylus may determine, based on different types of received events, for example, the event 1 used to indicate that the pressure-sensitive signal is received but no square wave signal is received, and/or the event 2 used to indicate that the square wave signal is received but no pressure-sensitive signal is received, a primary device (namely, the mobile phone) after the switching, and directionally send the subsequently generated pressure-sensitive signal to the mobile phone side. The stylus sends the square wave signal to the mobile phone.

In conclusion, in this application, the electronic devices connected to the stylus can report different events to the stylus based on obtained signals. The stylus can determine, based on the type of the received event, a receiving object of the pressure-sensitive signal. In other words, the stylus can determine, based on different event types, an electronic device on which the stylus currently writes, so that the electronic device after switching can obtain both the pressure-sensitive signal and the square wave signal, thereby meeting the ink-discharge condition and displaying the track; and the stylus is freely switched between different electronic devices.

The following describes in detail the stylus switching method in embodiments of this application with reference to several specific embodiments.

### Scenario 1

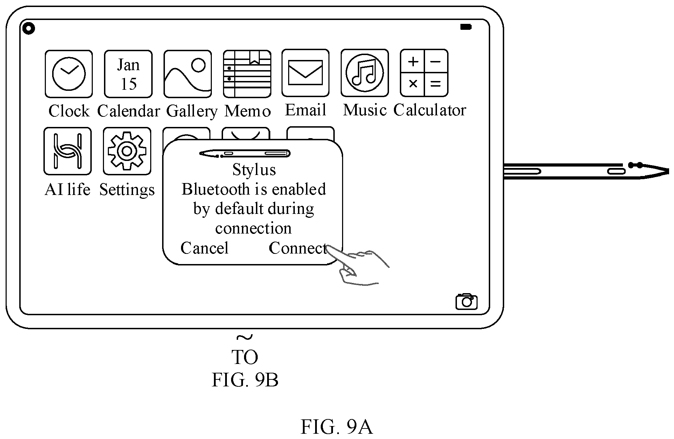

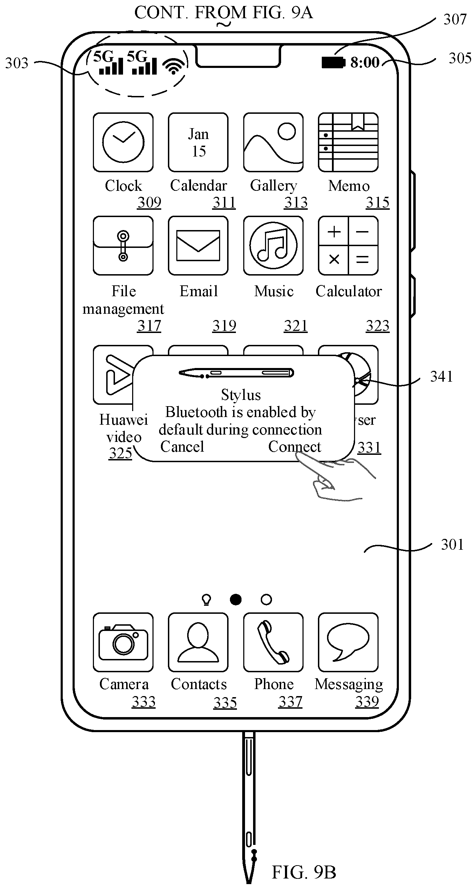

With reference to the application scenario shown in FIG. 1, for example, a stylus may separately establish a Bluetooth connection to a tablet and a mobile phone, to exchange data. FIG. 9A and FIG. 9B are a schematic diagram of an example of establishing Bluetooth connections between the stylus and the tablet and between the stylus and the mobile phone. Refer to FIG. 9A and FIG. 9B. The following uses a Bluetooth pairing process between the stylus and the mobile phone as an example for description. For example, a USB connector, for example, a USB Type-C connector, is disposed on a top (the other end opposite to a nib) of the stylus. The stylus may be inserted into a USB Type-C port of the mobile phone through the USB Type-C connector. A USB Type-C male connector is usually configured on a stylus side. In some embodiments, another USB port such as a light interface may be used.

After the stylus is connected to the mobile phone through the USB Type-C port, the mobile phone may detect that the stylus is inserted into the USB Type-C port of the mobile phone, and a prompt box 341 is popped up. Refer to FIG. 9A and FIG. 9B. A display interface of the mobile phone includes one or more controls. For example, the controls include but are not limited to a display window 301, a network control 303, a clock control 305, a power control 307, and application controls 309 to 339. Optionally, the prompt box 341 popped up by the mobile phone is displayed at an uppermost layer of the display window 301, that is, the prompt box 341 blocks some controls displayed in the display window 301, for example, application controls 325 to 331.

Still refer to FIG. 9A and FIG. 9B. For example, the prompt box 341 includes at least one of the following: an icon of the stylus, a model or name of the stylus, a " Cancel" option, and a "Connect" option. Optionally, if a Bluetooth function of the mobile phone is not enabled, the prompt box 341 may further display prompt information that "Bluetooth is enabled by default during connection".

For example, refer to FIG. 9A and FIG. 9B. If a user taps the "Connect" option, based on the received user instruction, the mobile phone may enable the Bluetooth function, and establish the Bluetooth connection to the stylus. For example, a process of establishing a Bluetooth connection between a stylus and an electronic device may also be referred to as Bluetooth pairing. It should be noted that, if the Bluetooth function is enabled on the mobile phone, when the user taps connection prompt information, the mobile phone directly establishes the Bluetooth connection to the stylus.

For example, if detecting that the user taps the "Cancel" option, the mobile phone may cancel the prompt box 341 based on the received user instruction.

For example, when the stylus is connected to the electronic device, the electronic device may charge the stylus. An interface of the electronic device may display identifier information to inform the user that the stylus is currently being charged. The stylus may also inform, in a form such as an LED, that the stylus is currently in a charging state.

For example, when it is detected that the user taps the "Cancel" option shown in FIG. 9A and FIG. 9B, a second prompt box may be displayed, indicating that only the stylus is charged. The electronic device charges the stylus in response to a determining operation from the user.

It should be noted that, in other embodiments, manners of connecting styluses of different manufacturers and different models to an electronic device (for example, a tablet or a mobile phone) may be different. For example, the stylus and the tablet may complete Bluetooth pairing with the electronic device in a magnetic suction manner, a USB cable connection manner, a proximity discovery manner, or the like. The Bluetooth pairing manner shown in FIG. 9A and FIG. 9B is merely an example, and is not limited in this application.

In some embodiments, after the stylus is paired with the tablet, if the mobile phone and the tablet use a same account, for example, a Huawei account, the stylus may directly establish the Bluetooth pairing with the mobile phone. In some embodiments, the user may set a maximum quantity of devices simultaneously connected to the stylus.

For example, in the Bluetooth pairing process between the stylus and the mobile phone, or after the Bluetooth pairing succeeds, the mobile phone sends, to the stylus, a radio frequency parameter (including information such as a frequency of a square wave signal, an interval between sending timeslots corresponding to the square wave signal, a width of a sending timeslot, and a quantity of sending timeslots in one period) corresponding to the touchscreen of the mobile phone, address information (for example, Bluetooth address information) of the mobile phone, and another parameter The stylus may receive and store a correspondence between a Bluetooth connection channel, the radio frequency parameter, the address information, and the another parameter The content is also applicable to solutions in Scenario 2 to Scenario 6, and details are not described below again.

Optionally, in the description of this embodiment of this application, the Bluetooth connection channel between the stylus and the electronic device may be a Bluetooth low energy (Bluetooth Low Energy, BLE) connection channel, or may be a classic Bluetooth basic rate/enhanced data rate (Basic Rate, basic rate/Enhanced Data Rate, enhanced rate, BR/EDR) connection channel.

For example, after the Bluetooth pairing between the stylus and the mobile phone succeeds, the stylus is removed from the USB Type-C port of the mobile phone and inserted into a USB Type-C port of the tablet, to establish the Bluetooth connection to the tablet. The Bluetooth pairing process between the stylus and the tablet is similar to that corresponding to the mobile phone, and details are not described herein again. After the Bluetooth pairing between the stylus and the tablet succeeds, the stylus is removed from the USB Type-C port of the tablet. During use, the stylus remains the Bluetooth connections to the tablet and mobile phone within predetermined ranges of the tablet and mobile phone. Optionally, if the stylus disconnects the Bluetooth connections to the tablet and the mobile phone (including disconnection based on a user instruction or exceeding the predetermined ranges (for example, 50 meters)), the stylus needs to reconnect to the disconnected electronic device before implementing the switching method in this application.

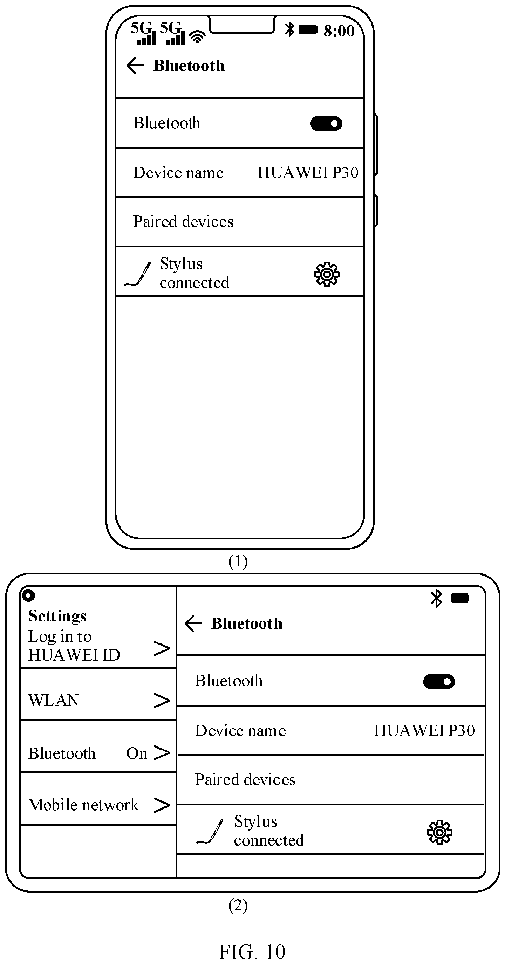

FIG. 10 is a schematic diagram after a stylus completes Bluetooth pairing with both a tablet and a mobile phone. Refer to FIG. 10. (1) in FIG. 10 is a schematic diagram of a Bluetooth setting interface of the mobile phone, and (2) in FIG. 10 is a schematic diagram of a Bluetooth display interface of the tablet. A mobile phone side is used as an example. The Bluetooth setting interface of the mobile phone displays a prompt that a Bluetooth function is enabled, and a Bluetooth icon is displayed in the upper right corner. The Bluetooth setting interface further includes a device name of the mobile phone and a list of paired devices. For example, the mobile phone has completed Bluetooth pairing with the stylus. In the list of paired devices, a name or a model and an identifier of the stylus are displayed, and a prompt is displayed indicating that the stylus is a connected device. Interface descriptions of the tablet are similar to those of the mobile phone, and details are not described herein again.

In this embodiment of this application, the stylus may simultaneously establish Bluetooth connections to a plurality of Bluetooth devices. For example, the plurality of Bluetooth devices may have a same account (which may also be referred to as a user account).

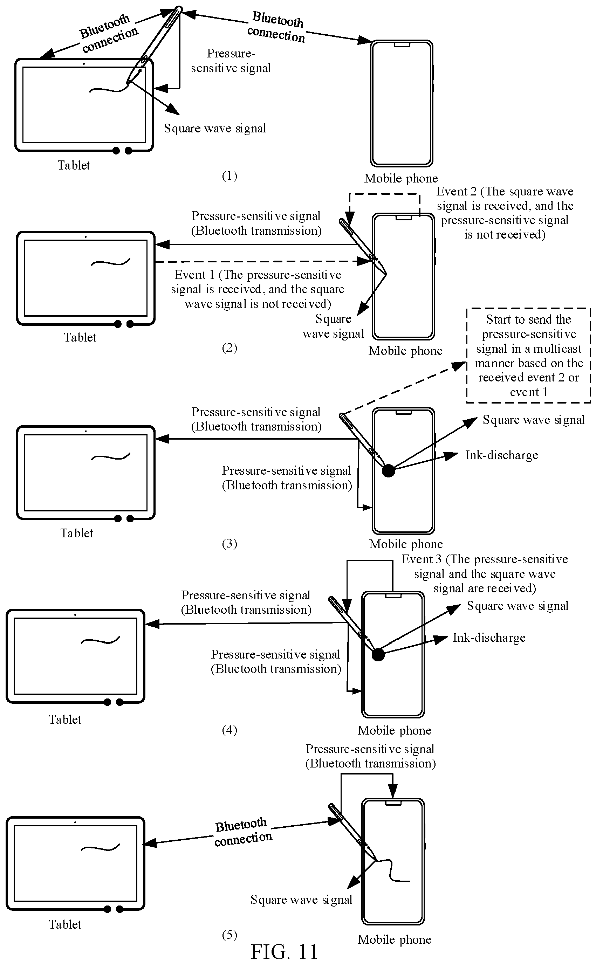

FIG. 11 is a schematic flowchart of a stylus switching method according to an embodiment of this application. A specific procedure of switching a stylus from a tablet to a mobile phone to write is described below with reference to (1) in FIG. 11 to (5) in FIG. 11.

Refer to (1) in FIG. 11. Specifically, the stylus separately completes Bluetooth pairing with the mobile phone and the tablet. For example, the tablet is the last device that performs Bluetooth pairing with the stylus, that is, the tablet is a primary device of the stylus, and the mobile phone may also be referred to as a secondary device (or a slavery device). In some embodiments, when the tablet is the primary device, a pairing interface or a status bar in (2) in FIG. 10 may further display an identifier or prompt information that the stylus can write on the tablet, or may display, in the pairing interface or the status bar in (1) in FIG. 10, an identifier or prompt information that the stylus is unavailable.

For example, a user holds the stylus to write on the tablet, the tablet may receive a pressure-sensitive signal from the stylus through an antenna of the tablet, and the tablet receives a square wave signal from the stylus via a TP sensor. The tablet may display a track on a screen based on the received pressure-sensitive signal and the received square wave signal. During this period, the stylus remains Bluetooth connections to the tablet and mobile phone. It should be noted that in Scenario 1 to Scenario 3, an example in which radio frequency parameters corresponding to the tablet and the mobile phone are the same is used for description. In other words, when the stylus performs Bluetooth pairing with the tablet and the mobile phone, the obtained radio frequency parameters corresponding to the tablet and the mobile phone are consistent. Embodiments in which radio frequency parameters corresponding to the tablet and the mobile phone are different are described in Scenario 4 to Scenario 6, and details are not described below.

Refer to (2) in FIG. 11. For example, a user switches the stylus from the tablet to the mobile phone to write. Specifically, when the user holds the stylus to write on the mobile phone, the stylus is in contact with a screen of the mobile phone. Correspondingly, because the stylus cannot perceive that writing is currently switched to the mobile phone, the stylus sends the generated pressure-sensitive signal (for a manner of generating the pressure-sensitive signal, refer to related descriptions in FIG. 4, and details are not described herein) to the primary device (namely, the tablet) through a Bluetooth antenna of the stylus, and the tablet may receive the pressure-sensitive signal from the stylus through the antenna (for example, the antenna 2 in FIG. 1) of the tablet.

Still refer to (2) in FIG. 11. Specifically, as shown in content in FIG. 5 or FIG. 6, the TP sensor on the screen of the mobile phone periodically sends a detection signal. After receiving the detection signal from the mobile phone through the antenna (for example, the antenna 205 in FIG. 4), the stylus outputs the square wave signal in a specified timeslot through the antenna. Correspondingly, the mobile phone may receive the square wave signal from the stylus via the TP sensor.

Optionally, a moment at which the stylus sends the pressure-sensitive signal and a moment at which the stylus sends the square wave signal may be the same or may be different. Generally, when a distance between a nib of the stylus and a touchscreen is 2 cm, the stylus can receive the detection signal sent by the TP sensor, and send the square wave signal to the TP sensor (for a principle, refer to related descriptions in FIG. 7). The square wave signal may be sent earlier than the pressure-sensitive signal.

Still refer to (2) in FIG. 11. For example, after receiving the pressure-sensitive signal, the tablet detects that no square wave signal is received. Correspondingly, the tablet sends event information to the stylus through the antenna of the tablet, where the event information includes an event 1 used to indicate that the tablet receives the pressure-sensitive signal and does not receive the square wave signal. The stylus may receive the event information from the tablet through the Bluetooth antenna. Optionally, the tablet may report the event 1 to the stylus once every 100 ms for duration of 1s, or the tablet stops reporting the event 1 after receiving no pressure-sensitive data.

In this case, because the TP sensor in the mobile phone receives the square wave signal, and does not receive the pressure-sensitive signal. Correspondingly, the mobile phone sends event information to the stylus through the antenna of the mobile phone, where the event information includes an event 2 used to indicate that the mobile phone receives the square wave signal, and does not receive the pressure-sensitive signal. The stylus may receive the event information from the mobile phone through the Bluetooth antenna. Optionally, the mobile phone may report the event 2 to the stylus every 100 ms for duration of 1s, or the mobile phone stops reporting the event 2 when receiving no square wave signal, or after receiving the pressure-sensitive signal and the square wave signal.

Optionally, a moment at which the stylus receives the event 1 may be the same as or different from a moment at which the stylus receives the event 2. Generally, when processing capabilities of the tablet and the mobile phone are the same or have a small difference, because a moment at which the mobile phone receives the square wave signal may be earlier than a moment at which the tablet receives the pressure-sensitive signal, correspondingly, a moment at which the mobile phone reports the event 2 may be earlier than a moment at which the tablet reports the event 1.

Refer to (3) in FIG. 11. For example, after receiving, through the Bluetooth antenna, the event 1 reported by the tablet and/or the event 2 reported by the mobile phone, the stylus may separately send the pressure-sensitive signal to the

tablet and the mobile phone in a multicast manner. In other words, after receiving the event 1, the event 2, or the event 1 and the event 2, the stylus may trigger the multicast transmission manner, that is, separately send the pressure-sensitive signal to the mobile phone and the tablet through the Bluetooth antenna.

For example, the stylus may separately send the pressure-sensitive signal to the tablet and the mobile phone based on a Bluetooth connection channel between the tablet and the stylus and a Bluetooth connection channel between the mobile phone and the stylus.

Still refer to (3) in FIG. 11. For example, after the stylus separately sends the pressure-sensitive signal to the mobile phone and the tablet in the multicast manner, the tablet and the mobile phone may receive the pressure-sensitive signals from the stylus through respective antennas. For example, when the mobile phone receives the square wave signal, and the mobile phone also receives the pressure-sensitive signal from the stylus, the mobile phone may determine that an ink-discharge condition is met (that is, the pressure-sensitive signal and the square wave signal are received). The mobile phone may display a track on the screen based on the received pressure-sensitive signal and the received square wave signal.

Refer to (4) in FIG. 11. For example, after receiving the pressure-sensitive signal and the square wave signal, the mobile phone sends event information to the stylus through the antenna of the mobile phone. The event information includes an event 3 used to indicate that the mobile phone receives the pressure-sensitive signal and the square wave signal. Correspondingly, the stylus may receive the event information from the mobile phone through the Bluetooth antenna.

Still refer to (4) in FIG. 11. For example, after the stylus receives the event 3 on the Bluetooth connection channel between the stylus and the mobile phone, the stylus sends, on the Bluetooth connection channel, the subsequently generated pressure-sensitive signal to the mobile phone. In other words, after receiving the event 3, the stylus changes the multicast transmission manner of the pressure-sensitive signal to a unicast manner, that is, directionally sends the pressure-sensitive signal to a transmitting end (namely, the mobile phone) of the event 3. This can prevent the stylus from continuously broadcasting the pressure-sensitive signal to a plurality of devices, and reduce power consumption of the stylus. It should be noted that, in (4) in FIG. 11 and (5) in FIG. 11, the antennas (that is, an antenna 1 and an antenna 2) of the stylus remain periodically outputting the square wave signals in a specified timeslot (for related descriptions, refer to FIG. 5 or FIG. 6).

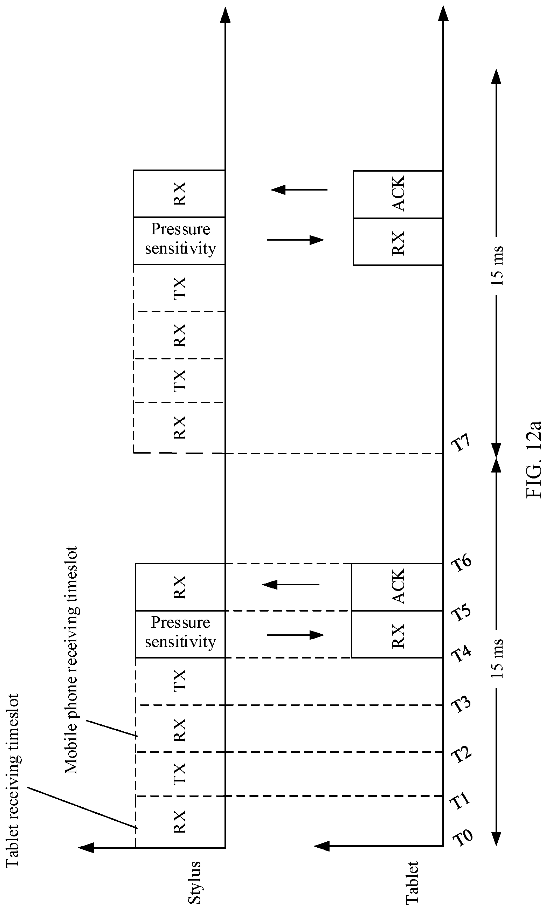

FIG. 12a to FIG. 12c each are a schematic diagram of Bluetooth data exchange between a stylus and electronic devices (including a tablet and a mobile phone). Refer to FIG. 12a. For example, each period (for example, duration of the period is 15 ms) on a Bluetooth channel of the stylus includes a tablet receiving timeslot, for example, a moment T0 to T 1 in a first period of 15 ms, the tablet receiving timeslot is used to receive information or data reported by the tablet. For example, the period further includes a sending timeslot corresponding to the tablet receiving timeslot, and the sending timeslot is used to send acknowledge character (Acknowledge character, ACK) information to the tablet after the information or data sent by the tablet is received.

Optionally, each period further includes a mobile phone receiving timeslot, for example, a moment T2 to T3 in the first period of 15 ms. The mobile phone receiving timeslot is used to receive information or data reported by the mobile phone. For example, the period further includes a sending timeslot corresponding to the mobile phone receiving timeslot, and the sending timeslot is used to send ACK information to the mobile phone after the information or data sent by the mobile phone is received.

Optionally, in a scenario in which a primary device corresponding to the stylus is the tablet, the stylus sends a pressure-sensitive signal to the tablet in a pressure-sensitive sending timeslot. For example, in the first period of 15 ms, the pressure-sensitive sending timeslot is a moment T4 to T5. Correspondingly, the tablet may receive the pressure-sensitive signal from the stylus in a receiving timeslot (the moment T4 to T5) on a Bluetooth channel of the tablet, and send the ACK information to the stylus in the sending timeslot (a moment T5 to T6). The stylus may receive the ACK information from the tablet in a receiving timeslot (the moment T5 to T6), to confirm that the tablet has successfully received the pressure-sensitive signal.

For example, timeslot allocation in a second period (a moment T7 is a start moment) may be the same as that in the first period of 15 ms. Details are not described herein again. Optionally, pressure parameters indicated by pressure-sensitive signals sent by the stylus in periods may be the same or different. For example, refer to FIG. 12a. A pressure parameter indicated by a pressure-sensitive signal sent by the stylus in the first period of 15 ms may be the same as or different from a pressure parameter indicated by a pressure-sensitive signal sent by the stylus in the second period of 15 ms. This is not limited in this application.

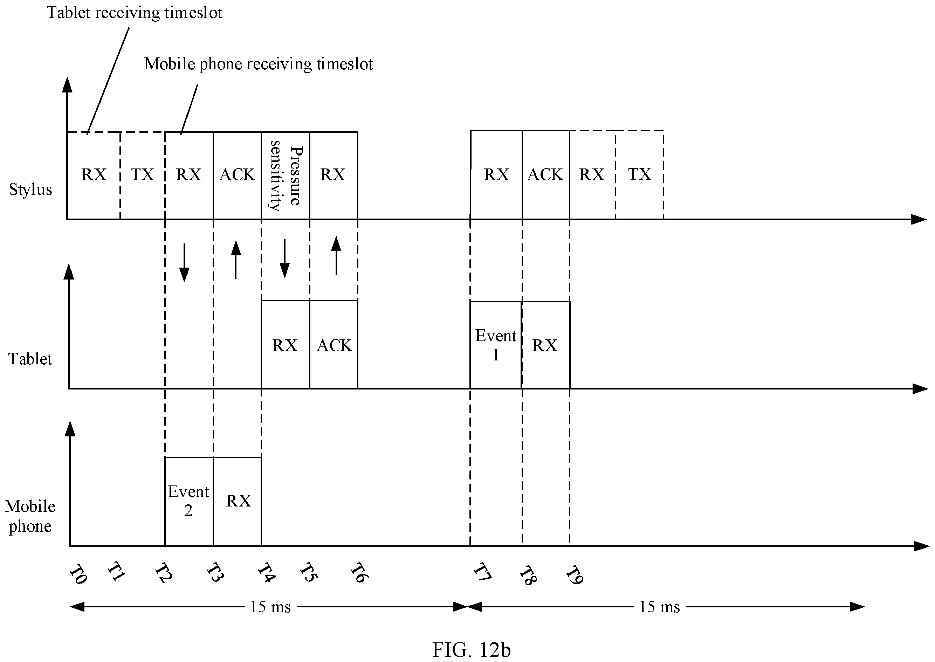

Based on FIG. 12a, a time sequence relationship in (2) in FIG. 11 is described with reference to FIG. 12b. Specifically, the Bluetooth channel of the stylus includes a tablet receiving timeslot (a moment T0 to T1) and a corresponding sending timeslot (T1 to T2) (For a related concept, refer to the description in FIG. 12a. Details are not described herein again). Refer to FIG. 12b. After detecting a square wave signal, the mobile phone may send an event 2 (namely, the event information described above, to better distinguish reporting time sequences of different events, the following uses only a specific type of each event as an example for description) to the stylus in the mobile phone sending timeslot (the moment T2 to T3). Correspondingly, the stylus receives the event 2 from the mobile phone in the mobile phone receiving timeslot (the moment T2 to T3), and sends the ACK information to the mobile phone in the sending timeslot (the moment T3 to T4). The mobile phone may receive the ACK information from the stylus in the receiving timeslot (the moment T3 to T4), to determine that the stylus successfully receives the event 2.

It should be noted that, due to a delay caused by a procedure in which the stylus, after receiving the event 2, reports the event 2 to an upper layer (for example, an MCU) and performs corresponding processing, the stylus generally still performs corresponding processing based on a previous period in this period, that is, still sends the pressure-sensitive signal to the tablet. For specific content, refer to the description in FIG. 12a. Details are not described herein again. Still refer to FIG. 12b. For example, the tablet sends an event 1 to the stylus in a sending timeslot (a moment T7 to T8). Correspondingly, the stylus receives the event 1 from the tablet in a tablet receiving timeslot (the moment T7 to T8), and sends the ACK information to the tablet in a sending timeslot (a moment T8 to T9). The tablet may receive the ACK information from the stylus in a receiving timeslot (the moment T8 to T9), to determine that the stylus successfully receives the event 1.

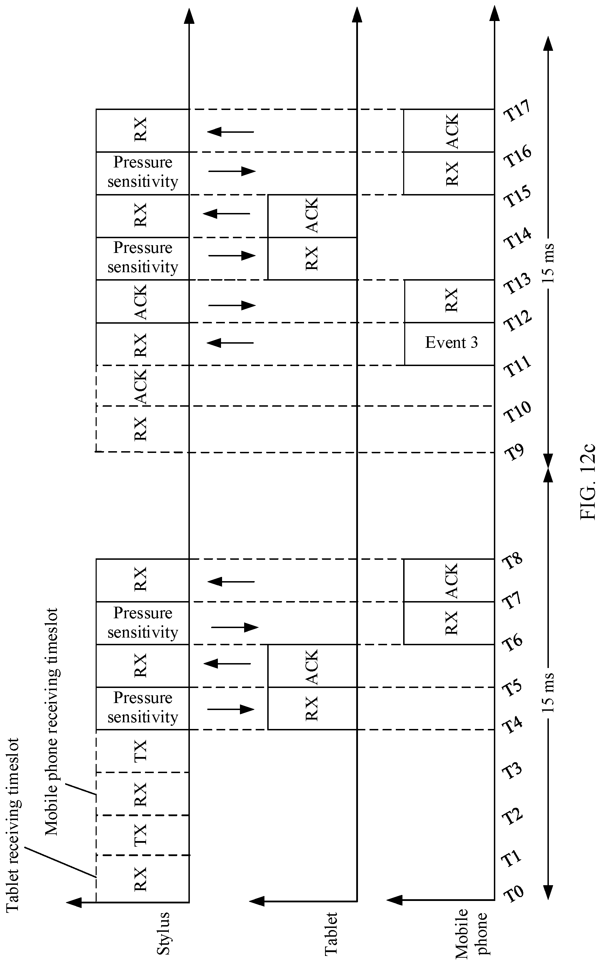

Based on FIG. 12a and FIG. 12b, a time sequence relationship in (3) in FIG. 11 is described with reference to FIG. 12c. Refer to FIG. 12c. For example, for a moment T0 to T4, refer to description in FIG. 12a. Details are not described herein again. The stylus sends a pressure-sensitive signal to the tablet in a pressure-sensitive sending timeslot (a moment T4 to T5). Correspondingly, the tablet receives the pressure-sensitive signal from the stylus in a receiving timeslot (the moment T4 to T5), and sends ACK information to the stylus in a sending timeslot (a moment T5 to T6). Correspondingly, the stylus receives the ACK information from the tablet in a receiving timeslot (the moments T5 to T6), to determine that the tablet successfully receives the pressure-sensitive signal. For example, the stylus sends a pressure-sensitive signal to the mobile phone in a pressure-sensitive sending timeslot (a moment T6 to T7). Correspondingly, the mobile phone receives the pressure-sensitive signal from the stylus in a receiving timeslot (the moment T6 to T7), and sends ACK information to the stylus in a sending timeslot (a moment T7 to T8). Correspondingly, the stylus receives the ACK information from the mobile phone in a receiving timeslot (the moments T7 to T8), to determine that the mobile phone successfully receives the pressure-sensitive signal.

Still refer to FIG. 12c. For example, the mobile phone sends an event 3 to the stylus in a sending timeslot (a moment T11 to T12). The stylus receives the event 3 from the mobile phone in a mobile phone receiving timeslot (the moment T11 to T12), and sends ACK information to the mobile phone in a sending timeslot (a moment T12 to T13). The mobile phone may receive the ACK information from the stylus in a receiving timeslot (the moment T12 to T13), to determine that the stylus successfully receives the event 3. It should be noted that, as described above, interval duration of reporting the event 1 by the tablet is 100 ms, that is, in a process in which the tablet receives the pressure-sensitive signal and does not receive the square wave signal, even if the tablet receives, in each period of 15 ms, the pressure-sensitive signal sent by the stylus, the tablet still reports the event 1 every 100 ms. Correspondingly, in FIG. 12c, assuming that a first period of 15 ms in FIG. 12c is an adjacent period of a second period of 15 ms in FIG. 12b, even if the tablet receives, in the first period of 15 ms in FIG. 12c, the pressure-sensitive signal sent by the stylus, because the reporting period of 100 ms is not reached, the tablet does not report the event 1 (indicating that the pressure-sensitive signal is received but the square wave signal is not received) in the second period of 15 ms in FIG. 12c. As shown in FIG. 11, after receiving the event 3, the stylus stops multicasting, that is, stops sending the pressure-sensitive signal to the tablet, and sends only the generated pressure-sensitive signal to the mobile phone. However, actually, due to impact of a processing delay of the stylus, after receiving the event 3, the stylus generally still continues to send the pressure-sensitive signal in the multicast manner in this period (namely, the second period of 15 ms in FIG. 12c). For example, refer to FIG. 12c. After receiving the event 3, the stylus still sends the pressure-sensitive signal to the tablet at a moment T13 to T14, receives, at a moment T14 to T15, the ACK information sent by the pressure-sensitive signal, sends the pressure-sensitive signal to the mobile phone at a moment T15 to T16, and receives, at a moment T16 to T 17, the ACK information sent by the mobile phone.

It should be noted that the pressure-sensitive signals sent by the stylus to the tablet and/or the mobile phone in (2) in FIG. 11, (3) in FIG. 11, (4) in FIG. 11, and FIG. 12ato FIG. 12c are all generated and sent when the stylus is in contact with the screen of the mobile phone. Correspondingly, in this embodiment of this application, the pressure-sensitive signals generated when the stylus is in contact with the screen of the mobile phone may be essentially understood as a same signal, and only sending moments and indicated pressure parameters are different between the pressure-sensitive signals. For example, a pressure-sensitive signal generated when the stylus writes on the mobile phone may be referred to as a second pressure-sensitive signal, and a pressure-sensitive signal generated when the stylus writes on the tablet may be referred to as a first pressure-sensitive signal.

In another example, based on a case in which different pressure-sensitive signals are sent at different moments, the pressure-sensitive signals in (2) in FIG. 11, (3) in FIG. 11, and (4) in FIG. 11 may also be understood as different signals.

In still another example, pressure-sensitive signals sent in a same period may be understood as a same signal, and pressure-sensitive signals in different periods may be understood as different signals. For example, two pressure-sensitive signals in the first period of 15 ms in FIG. 12(c) may be understood as a same pressure-sensitive signal, for example, referred to as a first pressure-sensitive signal. Two pressure-sensitive signals in the second period of 15 ms may be understood as a same pressure-sensitive signal, for example, referred to as a second pressure-sensitive signal. The first pressure-sensitive signal and the second pressure-sensitive signal belong to different periods, and may be understood as different signals.

It should be further noted that a quantity and distribution of timeslots shown in FIG. 12a to FIG. 12c, a sending time sequence of each signal, a period length, and the like are all examples. This is not limited in this application.

It should be further noted that the periods shown in FIG. 12a to FIG. 12c are different periods. For example, the first period of 15 ms shown in FIG. 12b may be a next period adjacent to the second period of 15 ms shown in FIG. 12a, or may be an interval period, this is not limited in this application.

It should be further noted that, in each scenario in embodiments of this application, descriptions are provided by using an example in which the stylus moves (namely, writes) in a display window of the mobile phone (or the tablet) or an application interface provided by an application (for example, a drawing application) on the mobile phone, and the corresponding track is displayed in the display window or the application interface of the mobile phone. Optionally, the "track" in embodiments of this application may also be a track point when the stylus taps (for example, taps any icon) on the mobile phone, or may be a dragging track when the stylus drags an icon or another object on the mobile phone. That is, when the stylus taps or moves on the mobile phone, corresponding handwriting may be displayed in the display window or the application interface of the mobile phone. Alternatively, another manner may be used, for example, a movement track of a dragged object indicates the track of the stylus in the display window or the application interface of the mobile phone. This is not limited in this application.

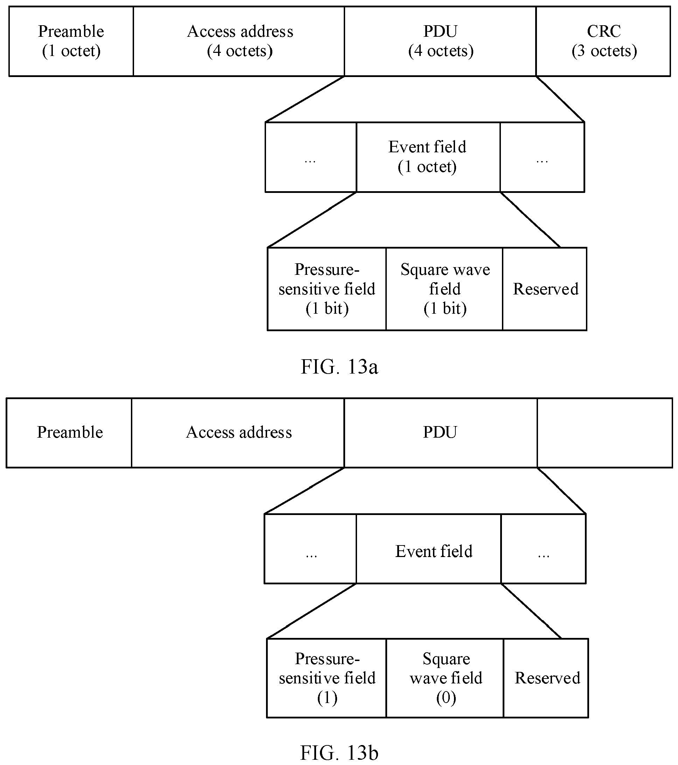

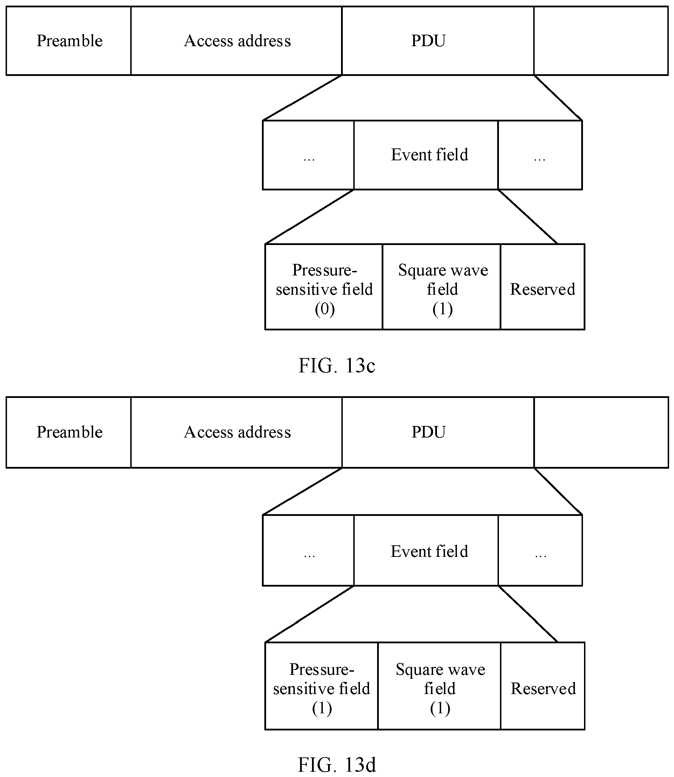

For example, FIG. 13a to FIG. 13d each are a schematic diagram of an example of a format of Bluetooth information. Refer to FIG. 13a. The Bluetooth information includes but is not limited to a preamble (preamble) field, an access address (access address), a protocol data unit (Protocol Data Unit, PDU), and cyclic redundancy check (Cyclic Redundancy Check, CRC). The PDU includes an event field (namely, the event information described above), and indicates an event. For example, the event field includes a pressure-sensitive field and a square wave field, and "0" and " 1" are used to indicate whether a corresponding signal is received. For example, if a mobile phone receives a pressure-sensitive signal and does not receive a square wave signal, characters of the pressure-sensitive field and the square wave field are " 1" and "0" respectively, that is, indicate an event 1, as shown in FIG. 13b. If a mobile phone does not receive a pressure-sensitive signal but receives a square wave signal, characters of the pressure-sensitive field and the square wave field are "0" and " 1" respectively, that is, indicate an event 2, as shown in FIG. 13c. If a mobile phone receives a pressure-sensitive signal and a square wave signal, characters of the pressure-sensitive field and the square wave field are " 1" and " 1" respectively, that is, indicate an event 3, as shown in FIG. 13d. It should be noted that both a location and a length of the field shown in FIG. 13a to FIG. 13d are examples. This is not limited in this application. For example, after receiving the Bluetooth information (namely, the event information described above), a stylus may parse the Bluetooth information to obtain values carried in the pressure-sensitive field and the square wave field in the event field, and determine a corresponding event.

In a possible implementation, if the stylus is switched from the mobile phone back to the tablet, specific content of a switching procedure is similar to related content in FIG. 11, and details are not described herein again.

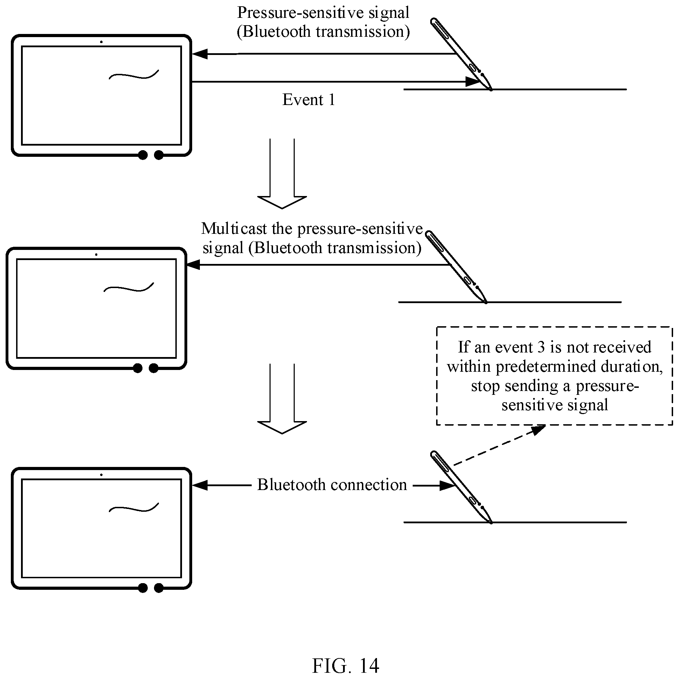

In another possible implementation, the stylus sends pressure-sensitive data in a multicast manner (that is, separately sends the pressure-sensitive data to the mobile phone and the tablet). If the event 3 is not received within predetermined duration (for example, 500 ms), the stylus stops multicasting. For example, as shown in FIG. 14, if a nib of a stylus is in contact with a desktop, the stylus sends a pressure-sensitive signal to a tablet, and the tablet receives the pressure-sensitive signal and does not receive a square wave signal, the tablet reports an event 1 (that is, the pressure-sensitive signal is received and the square wave signal is not received) to the stylus. After receiving the event 1, the stylus triggers a multicast manner (that is, separately sends the pressure-sensitive signal to a mobile phone and the tablet) to send the pressure-sensitive signal. It should be noted that, only the tablet is shown in FIG. 14. Actually, in a scenario in which the stylus is connected to the tablet and the mobile phone, the mobile phone also receives the pressure-sensitive signal sent by the stylus in the multicast manner, and correspondingly, the mobile phone reports an event 1 to the stylus. In a process in which the stylus sends the pressure-sensitive signal in the multicast manner, the events 1 reported by the tablet and the mobile phone are continuously received. If the stylus does not receive, within predetermined duration (500 ms), an event 3 sent by any electronic device connected to the stylus through Bluetooth, the stylus stops sending the pressure-sensitive signal, so as to prevent a resource waste caused by continuous multicast of the stylus due to an accidental touch.

In still another possible implementation, if another stylus is connected (namely, in Bluetooth pairing with, where the Bluetooth pairing is the same as that in FIG. 9A and FIG. 9B) to the tablet and the mobile phone in the application scenario, the tablet and the mobile phone perform Bluetooth pairing with the another stylus in response to an instruction from the user, and after the Bluetooth connections to the previous stylus are disconnected and the Bluetooth pairing between the another stylus and the tablet and the mobile phone succeeds, the stylus switching method in this embodiment of this application can be implemented.

### Scenario 2

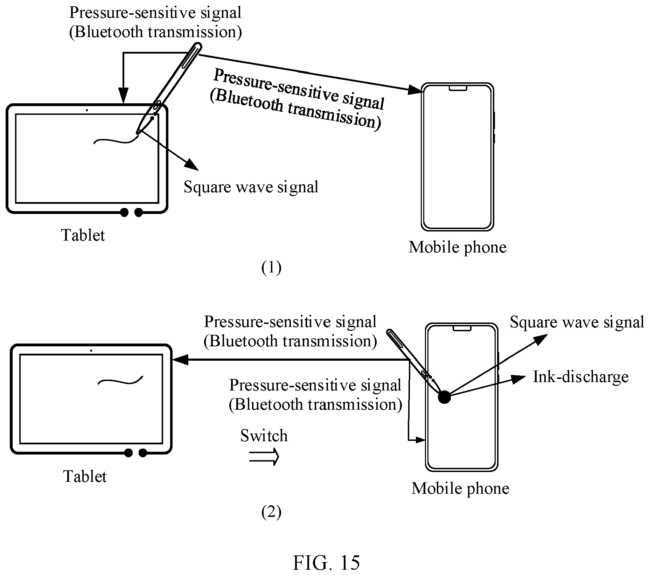

With reference to FIG. 1, FIG. 15 is a schematic flowchart of a stylus switching method according to an embodiment of this application. A specific procedure of switching a stylus from a tablet to a mobile phone to write is described below with reference to (1) in FIG. 15 and (2) in FIG. 15.

Refer to (1) in FIG. 15. Specifically, when the stylus writes on the tablet, after detecting that a nib is under pressure, the stylus continuously sends, in a multicast manner, a pressure-sensitive signal to the tablet and the mobile phone that are connected to the stylus. For example, when the stylus writes on the tablet, the tablet receives the pressure-sensitive signal and a square wave signal, determines that an ink-discharge condition is met, and displays a track on a screen based on the received pressure-sensitive signal and the received square wave signal. In this process, the mobile phone receives only the pressure-sensitive signal, and does not receive a pressure-sensitive signal. If determining that the ink-discharge condition is not met, the mobile phone does not display a track.

Refer to (2) in FIG. 15. For example, when the stylus is switched from the tablet to the mobile phone to write, the mobile phone receives the pressure-sensitive signal and the square wave signal. If determining that the ink-discharge condition is met, the mobile phone displays the track on a screen based on the received pressure-sensitive signal and the received square wave signal. In this process, the tablet receives only the pressure-sensitive signal, and does not receive the square wave signal. If the tablet determines that the ink-discharge condition is not met, the tablet does not display the track.

It should be noted that the continuous multicast manner in FIG. 15 is a solution with the highest switching efficiency. In other words, when the stylus switches to the mobile phone, that is, the mobile phone can display the track when the stylus writes for the first time, and no delay exists between the first writing and track displaying. However, in the solution in FIG. 11, when the stylus writes for the first time, a small delay exists between a writing moment and a track displaying moment.

It should be further noted that, as shown in FIG. 12c, in the multicast process, the stylus separately sends, in a polling manner, the pressure-sensitive signal to the plurality of electronic devices connected to the stylus, that is, after sending the pressure-sensitive signal to the tablet, the stylus sends the pressure-sensitive signal to the mobile phone in a next pressure-sensitive signal sending timeslot. Generally, the electronic device (the tablet or the mobile phone) is required to communicate with the stylus once within 15 ms. It is assumed that duration occupied by each communication between the stylus and the electronic device is 1 ms (for example, duration of T4 to T5 in FIG. 12c is 1 ms), the stylus sends the pressure-sensitive signal to a maximum of 10 electronic devices (a receiving timeslot corresponding to each device and another timeslot need to be subtracted) in each period (for example, period duration is 15 ms). If more than 10, for example, 15, electronic devices are connected to the stylus, the stylus sequentially sends, in timeslots corresponding to 10 pressure-sensitive signals in the period of 15 ms, the pressure-sensitive signals to the 10 electronic devices connected to the stylus, and the stylus sends the pressure-sensitive signals in this manner in each period. The other five electronic devices do not receive the pressure-sensitive signal from the stylus within 15 ms, and the five electronic devices are disconnected from the stylus by default. As described above, switching between the electronic devices by the stylus needs to be on the basis of a case in which the stylus establishes Bluetooth connections to the electronic devices. Correspondingly, if the Bluetooth connections between the electronic devices and the stylus are disconnected, the pressure-sensitive signal sent by the stylus cannot reach the disconnected electronic devices, that is, switching cannot be completed. The quantity of electronic devices and time consumed for communication are merely examples, and are not limited in this application.

Optionally, the technical solutions in FIG. 11 and FIG. 15 may coexist. The stylus may enable the technical solution in FIG. 15 when detecting that a trigger condition is met. For example, the trigger condition includes: a quantity of electronic devices connected to the stylus is less than a specified quantity (for example, four electronic devices), and a system resource and an air interface resource of the stylus are greater than or equal to a preset value. For example, the preset value may be 80% of the system resource and the air interface resource. To be specific, when a currently available system resource and air interface resource are greater than or equal to 80%, and the quantity of connected electronic devices is less than the specified quantity, the solution shown in FIG. 15 may be enabled. That is, when the trigger condition is met, the continuous multicast manner may be used; or when the trigger condition is not met, it is automatically switched to a unicast manner.

It should be noted that, unless otherwise specified, related content in Scenario 2 is the same as or similar to related content in Scenario 1, and details are not described herein again.

### Scenario 3

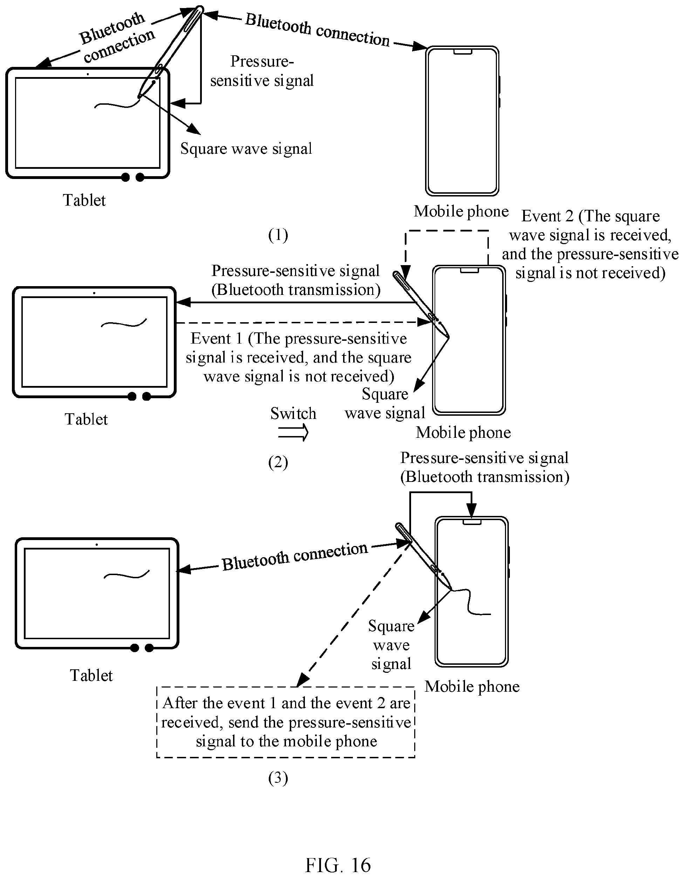

With reference to FIG. 1, FIG. 16 is a schematic flowchart of a stylus switching method according to an embodiment of this application. A specific procedure of switching a stylus from a tablet to a mobile phone to write is described below with reference to (1) in FIG. 16 to (5) in FIG. 16.

Related content in (1) in FIG. 16 and (2) in FIG. 16 is the same as related content in (1) in FIG. 11 and (2) in FIG. 11, and details are not described herein again.

Refer to (3) in FIG. 16. For example, after receiving, through a Bluetooth antenna, an event 1 (for example, indicating that the tablet receives a pressure-sensitive signal and does not receive a square wave signal) reported by the tablet, the stylus starts a timer. If receiving an event 2 (for example, indicating that the mobile phone receives a square wave signal and does not receive a pressure-sensitive signal) reported by the mobile phone within predetermined duration (for example, 500 ms), the stylus sends the pressure-sensitive signal to a peer end (namely, the mobile phone) on a Bluetooth connection channel for transmitting the event 2.

It should be noted that the event 2 may be sent to the stylus before the event 1. For example, the stylus ignores the received event 2, and starts to detect whether the event 2 is received only after receiving the event 1. As described above, after receiving the square wave signal, the mobile phone continuously sends the event 2 at a predetermined interval (100 ms). Therefore, after receiving the event 1, the stylus may still receive the event 2.

Optionally, a trigger condition of unicasting the pressure-sensitive signal may also be as follows: After receiving the event 2, if receiving the event 1 within the predetermined duration, the stylus sends the pressure-sensitive signal to the peer end (namely, the mobile phone) on the Bluetooth connection channel for transmitting the event 2. It should be noted that, compared with the switching procedure shown in FIG. 11, the procedure shown in FIG. 16 does not require a multicast process. Therefore, resource overheads and power consumption of the stylus can be reduced. However, the stylus in FIG. 16 needs to unicast the pressure-sensitive signal to the mobile phone only after detecting the event 1 and the event 2. In other words, the mobile phone receives the pressure-sensitive signal sent by the stylus only after the stylus receives the event 1 and the event 2. However, in the solution in FIG. 11, after receiving any event, the stylus may send the pressure-sensitive signal in the multicast manner, and the mobile phone can receive the pressure-sensitive signal. Therefore, in the solution in FIG. 16, when the stylus switches to the mobile phone to write for the first time, a delay of displaying a track by the mobile phone is longer than the delay of displaying the track by the mobile phone in the solution shown in FIG. 11.

It should be noted that, unless otherwise specified, related content in Scenario 3 is the same as or similar to related content in Scenario 1, and details are not described herein again.

### Scenario 4

In Scenario 1 to Scenario 3, descriptions are provided by using an example in which radio frequency parameters corresponding to the tablet and the mobile phone are the same. The following describes a stylus switching manner in detail in a scenario in which radio frequency parameters corresponding to some or all of a plurality of electronic devices (including a mobile phone and a tablet) connected to a stylus are different.

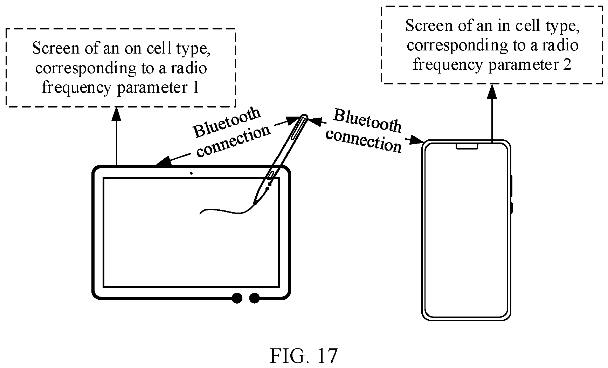

FIG. 17 is a schematic diagram of another application scenario according to an embodiment of this application. For ease of understanding, in Scenario 4 to Scenario 6, descriptions are provided by using only an example in which frequencies of square wave signals in radio frequency parameters are different. In another embodiment, Scenario 4 to Scenario 6 are also applicable to application scenarios of touchscreens with different other parameters in the radio frequency parameters. Details are not described in this application.

Refer to FIG. 17. For example, a screen type corresponding to a tablet is an on cell screen, and frequencies of corresponding square wave signals that can be received are a frequency 1 and a frequency 2 (for example, may be 100 kHz and 230 kHz); and a screen type corresponding to a mobile phone is an in cell screen, and a frequency of a corresponding square wave signal that can be received is a frequency 3 (for example, may be 320 kHz).

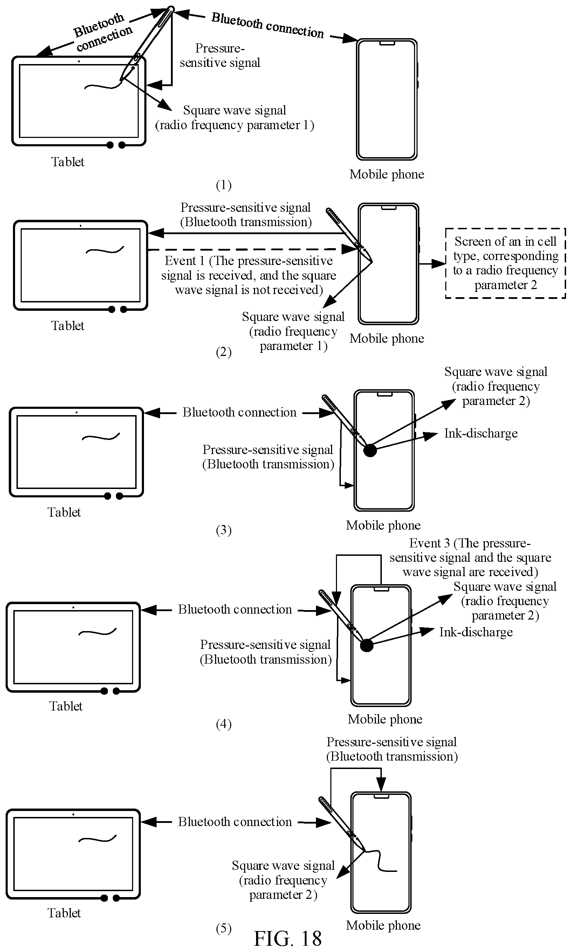

With reference to FIG. 17, FIG. 18 is a schematic flowchart of a stylus switching method according to this embodiment of this application. A specific procedure of switching a stylus from the tablet to the mobile phone to write is described below with reference to (1) in FIG. 18 to (5) in FIG. 18.

Refer to (1) in FIG. 18. Specifically, the stylus separately completes Bluetooth pairing with the mobile phone and the tablet. For example, the tablet is the last device that performs Bluetooth pairing with the stylus, that is, the tablet is a primary device of the stylus, and the mobile phone may also be referred to as a secondary device (or a slavery device). It should be noted that, as described in FIG. 9A and FIG. 9B in Scenario 1, after the stylus completes Bluetooth pairing with the mobile phone and the tablet, the stylus stores a correspondence between the radio frequency parameter (including that frequencies of the square wave signals are the frequency 1 and the frequency 2) corresponding to the touchscreen of the mobile phone and the Bluetooth connection channel between the stylus and the mobile phone, and also stores a correspondence between the radio frequency parameter (including that the frequency of the square wave signal is the frequency 3) corresponding to the touchscreen of the tablet and the Bluetooth connection channel between the stylus and the tablet.

For example, a user holds the stylus to write on the tablet, the tablet may receive the pressure-sensitive signal from the stylus through an antenna of the tablet, and the tablet receives the square wave signal from the stylus via a TP sensor. For example, frequencies of the square wave signals received by the tablet from the stylus are the frequency 1 (sent by an antenna 1 of the stylus) and the frequency 2 (sent by an antenna 2 of the stylus). The tablet displays a track on the screen based on the received pressure-sensitive signal and the received square wave signal. During this period, the stylus maintains Bluetooth connections to the tablet and the mobile phone.

Refer to (2) in FIG. 18. For example, the user switches the stylus from the tablet to the mobile phone to write. Specifically, when the user holds the stylus to write on the mobile phone, the stylus is in contact with the screen of the mobile phone. Because the stylus cannot perceive that writing is currently switched to the mobile phone, the stylus still sends the generated pressure-sensitive signal to the primary device (namely, the tablet).

For example, after receiving the pressure-sensitive signal, the tablet detects that no square wave signal is received. Correspondingly, the tablet sends event information to the stylus through the antenna of the tablet, where the event information includes an event 1 used to indicate that the tablet receives the pressure-sensitive signal and does not receive the square wave signal. The stylus may receive the event information from the tablet through the Bluetooth antenna.

Still refer to (2) in FIG. 18. For example, the TP sensor on the screen of the mobile phone periodically sends a detection signal. After receiving the detection signal from the mobile phone through the antenna, the stylus outputs the square wave signal in a specified timeslot through the antenna. Because the stylus does not perceive the switching, the stylus still outputs the square wave signal based on the radio frequency parameter corresponding to the tablet, that is, outputs the square wave signals with the frequency 1 and the frequency 2, but the mobile phone can receive the square wave signal with the frequency 3. Therefore, the TP sensor in the mobile phone cannot receive the square wave signals (whose frequencies correspond to the frequency 1 and the frequency 2) output by a nib of the stylus. Correspondingly, because the mobile phone receives neither the pressure-sensitive signal nor the square wave signal, the mobile phone does not report an event, and the stylus receives only the event 1 reported by the tablet.

Refer to (3) in FIG. 18. For example, after receiving the event 1, the stylus starts a timer. If the stylus does not receive an event 3 within predetermined duration (500 ms) after the timer starts timing, the stylus determines, based on the recorded correspondence between the Bluetooth connection channel and the radio frequency parameter, a radio frequency parameter corresponding to another electronic device (namely, the mobile phone) connected to the stylus other than the tablet through Bluetooth. Correspondingly, the stylus outputs, through the antenna based on the radio frequency parameter corresponding to the mobile phone, the square wave signal (for example, the frequency of the square wave signal is the frequency 3) corresponding to the radio frequency parameter corresponding to the mobile phone, and sends the pressure-sensitive signal to the mobile phone through the Bluetooth connection channel between the mobile phone and the stylus.

Refer to (4) in FIG. 18. For example, after receiving the pressure-sensitive signal and the square wave signal, the mobile phone displays a track on the screen based on the pressure-sensitive signal and the square wave signal. In addition, the mobile phone reports the event 3 to the stylus through the antenna of the mobile phone. As shown in (5) in FIG. 18, after receiving the event 3, the stylus may determine that the primary device is switched to the mobile phone, send the subsequently obtained pressure-sensitive signal to the mobile phone, and output the square wave signal (with the frequency 3) corresponding to the radio frequency parameter corresponding to the mobile phone.

It should be noted that, unless otherwise specified, related content in Scenario 4 is the same as or similar to related content in Scenario 1, and details are not described herein again.

### Scenario 5

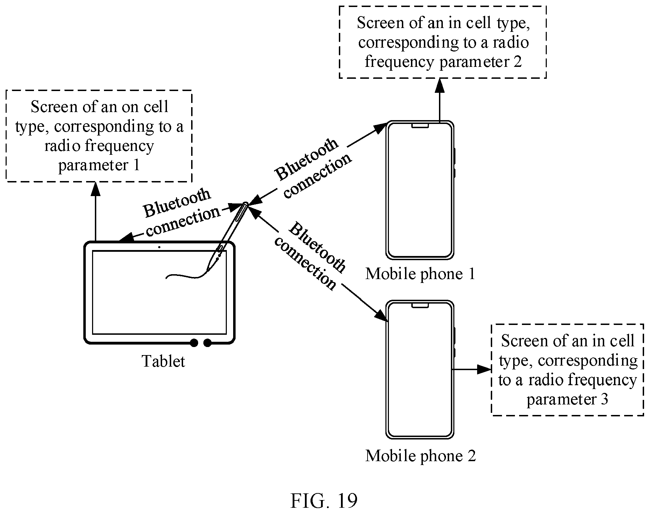

FIG. 19 is a schematic diagram of an example of another application scenario. Refer to FIG. 19. A screen type corresponding to a tablet is an on cell screen, and frequencies of corresponding square wave signals that can be received are a frequency 1 and a frequency 2 (for example, may be 100 kHz and 230 kHz). A screen type corresponding to a mobile phone 1 is an in cell screen, and a corresponding frequency of a square wave signal that can be received is a frequency 3 (for example, may be 320 kHz). A screen type corresponding to a mobile phone 2 is an in cell screen, and a frequency of a corresponding square wave signal that can be received is a frequency 4 (for example, may be 360 kHz).

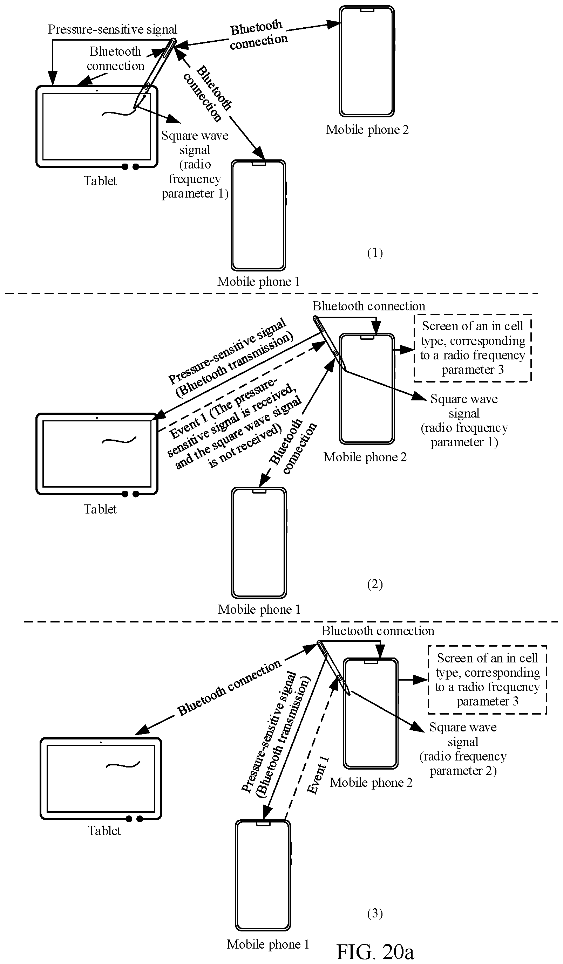

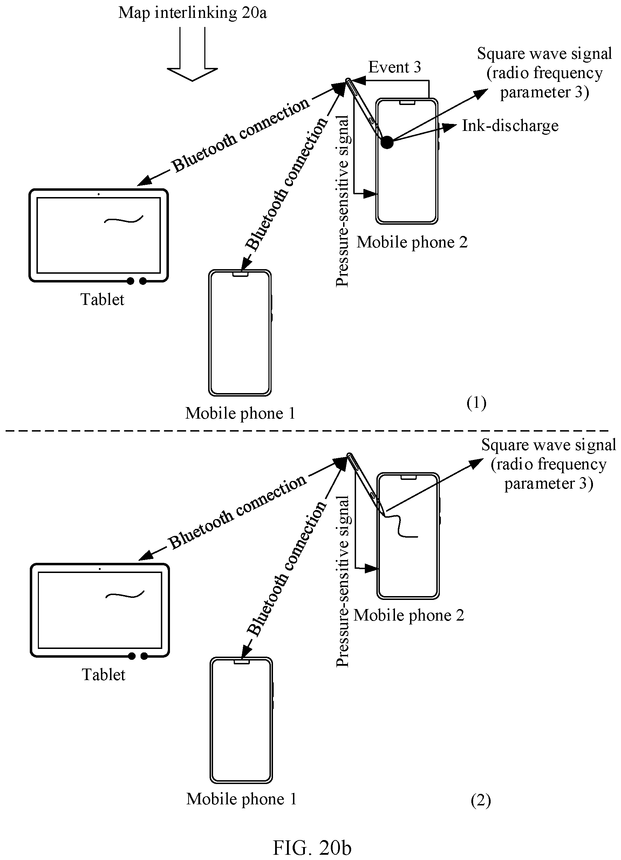

With reference to FIG. 9A and FIG. 9B, FIG. 20a and FIG. 20b each are a schematic flowchart of a stylus switching method according to an embodiment of this application. A specific procedure of switching the stylus from the tablet to the mobile phone 2 to write is described below with reference to (1) in FIG. 20a to (3) in FIG. 20a and (1) in FIG. 20b and (2) in FIG. 20b.

Refer to (1) in FIG. 20a. For example, the stylus separately completes Bluetooth pairing with the tablet, the mobile phone 1, and the mobile phone 2, and stores corresponding information (including correspondences between radio frequency parameters and Bluetooth channels, and for details, refer to the foregoing description) of the tablet, the mobile phone 1, and the mobile phone 2. For example, the tablet is the last device that performs Bluetooth pairing with the stylus, that is, the tablet is a primary device of the stylus, and the mobile phone 1 and the mobile phone 2 may also be referred to as secondary devices (or slavery devices).

For example, a user holds the stylus to write on the tablet, the tablet may receive a pressure-sensitive signal from the stylus through an antenna of the tablet, and the tablet receives a square wave signal from the stylus via a TP sensor. For example, the frequencies of the square wave signals received by the tablet from the stylus are the frequency 1 and the frequency 2. The tablet may display a track on a screen based on the received pressure-sensitive signal and the received square wave signal. During this period, the stylus maintains Bluetooth connections to the tablet and the mobile phones.

Refer to (2) in FIG. 20a. For example, the user switches the stylus from the tablet to the mobile phone 2 to write. Specifically, when the user holds the stylus to write on the mobile phone 2, the stylus is in contact with a screen of the mobile phone 2. Because the stylus cannot perceive that writing is currently switched to the mobile phone, the stylus still sends the generated pressure-sensitive signal to the primary device (namely, the tablet).

For example, after receiving the pressure-sensitive signal, the tablet detects that no square wave signal sent by the stylus is received. Correspondingly, the tablet sends event information to the stylus through the antenna of the tablet, where the event information includes an event 1 used to indicate that the tablet receives the pressure-sensitive signal and does not receive the square wave signal. The stylus may receive the event information from the tablet through a Bluetooth antenna.

Still refer to (2) in FIG. 20a. For example, a TP sensor on the screen of the mobile phone 2 periodically sends a detection signal. After receiving the detection signal from the mobile phone 2 through the antenna, the stylus outputs the square wave signal in a specified timeslot through the antenna. Because the stylus does not sense the switching, the frequencies of the square wave signals output by the stylus are still the frequencies corresponding to the tablet, namely, the frequency 1 and the frequency 2, but the mobile phone 2 can receive the square wave signal with the frequency 4. Therefore, the TP sensor of the mobile phone 2 cannot receive the square wave signals (whose frequencies are the frequency 1 and the frequency 2) output by a nib of the stylus. Because the mobile phone 2 receives neither the pressure-sensitive signal nor the square wave signal, the mobile phone 2 does not report an event, and correspondingly, the stylus receives only the event 1 reported by the tablet.

Refer to (3) in FIG. 20a. For example, after receiving the event 1, the stylus starts a timer. If the stylus does not receive an event 3 within predetermined duration (500 ms), the stylus sends, in sequence based on the recorded correspondences between the Bluetooth connection channel and the radio frequency parameter, the pressure-sensitive signal and the square wave signal corresponding to the radio frequency parameter to a next electronic device. For example, the correspondence includes a correspondence between the radio frequency parameter (including that the frequencies of the square wave signals are the frequency 1 and the frequency 2) corresponding to the tablet and a Bluetooth connection channel between the stylus and the tablet, a correspondence between the radio frequency parameter (including that the frequency of the square wave signal is the frequency 3) corresponding to the mobile phone 1 and a Bluetooth connection channel between the stylus and the mobile phone 1, and a correspondence between the radio frequency parameter (including that the frequency of the square wave signal is the frequency 4) corresponding to the mobile phone 2 and a Bluetooth connection channel between the stylus and the mobile phone 2. For example, the stylus sends the pressure-sensitive signal to the mobile phone 1 through the Bluetooth connection channel between the stylus and the mobile phone 1 according to the sequence of the recorded correspondences, and outputs the square wave signal (the frequency is the frequency 3) based on the radio frequency parameter corresponding to the mobile phone 1.

Still refer to (3) in FIG. 20a. For example, because the stylus currently writes on the mobile phone 2, the mobile phone 1 receives only the pressure-sensitive signal, and does not receive the square wave signal. Correspondingly, the mobile phone 1 reports an event 1 to the stylus through an antenna of the mobile phone 1, to indicate that the mobile phone 1 receives the pressure-sensitive signal and does not receive the square wave signal.

Refer to (1) in FIG. 20b. For example, after receiving the event 1, if the stylus detects that the event 3 is not received within the predetermined duration (500 ms), the stylus outputs, through the antenna according to the sequence of the recorded correspondences between the Bluetooth connection channels and the radio frequency parameters, the square wave signal (whose frequency is the frequency 4) corresponding to the radio frequency parameter corresponding to the mobile phone 2, and sends the pressure-sensitive signal to the mobile phone 2 on the Bluetooth connection channel between the mobile phone 2 and the stylus.

Still refer to (1) in FIG. 20b. For example, after receiving the pressure-sensitive signal and the square wave signal, the mobile phone 2 displays a track on the screen based on the pressure-sensitive signal and the square wave signal. In addition, the mobile phone 2 reports the event 3 to the stylus through an antenna of the mobile phone 2. As shown in (2) in FIG. 20b, after receiving the event 3, the stylus may determine that the primary device is switched to the mobile phone 2, send the subsequently obtained pressure-sensitive signal to the mobile phone 2, and output the square wave signal (with the frequency 4) corresponding to the radio frequency parameter corresponding to the mobile phone 2. It should be noted that, unless otherwise specified, related content in Scenario 5 is the same as or similar to related content in Scenario 1, and details are not described herein again.

### Scenario 6

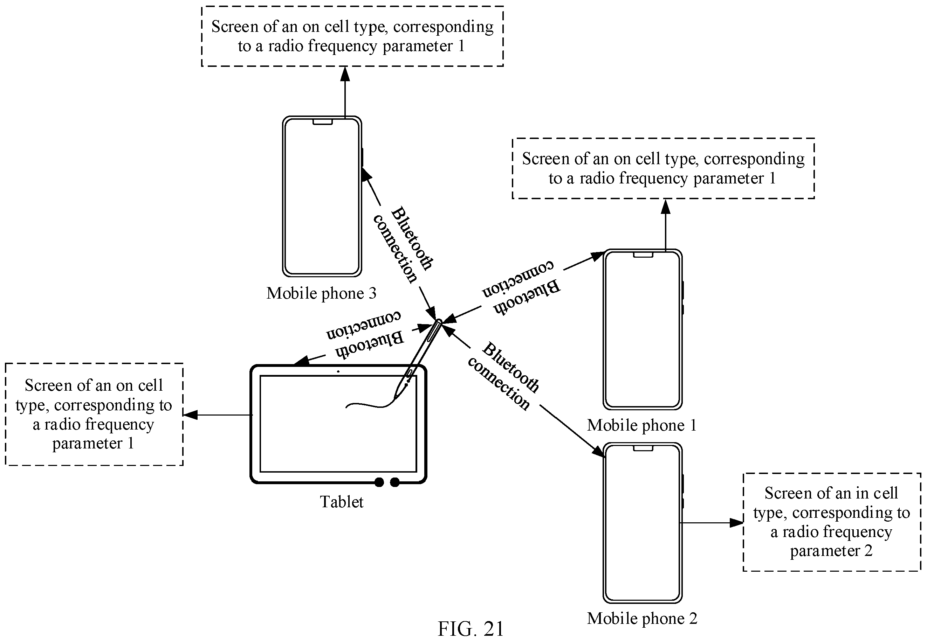

FIG. 21 is a schematic diagram of an example of another application scenario. Refer to FIG. 21. A screen type corresponding to a tablet is an on cell screen, and frequencies of corresponding square wave signals that can be received are a frequency 1 and a frequency 2 (for example, may be 100 kHz and 230 kHz). Radio frequency parameters corresponding to a mobile phone 1 and a mobile phone 3 are the same as those corresponding to the tablet, and the two mobile phones can receive the square wave signals whose frequencies are the frequency 1 and the frequency 2. A screen type corresponding to the mobile phone 2 is an in cell screen, and a corresponding frequency of a square wave signal that can be received is a frequency 3 (for example, may be 320 kHz).

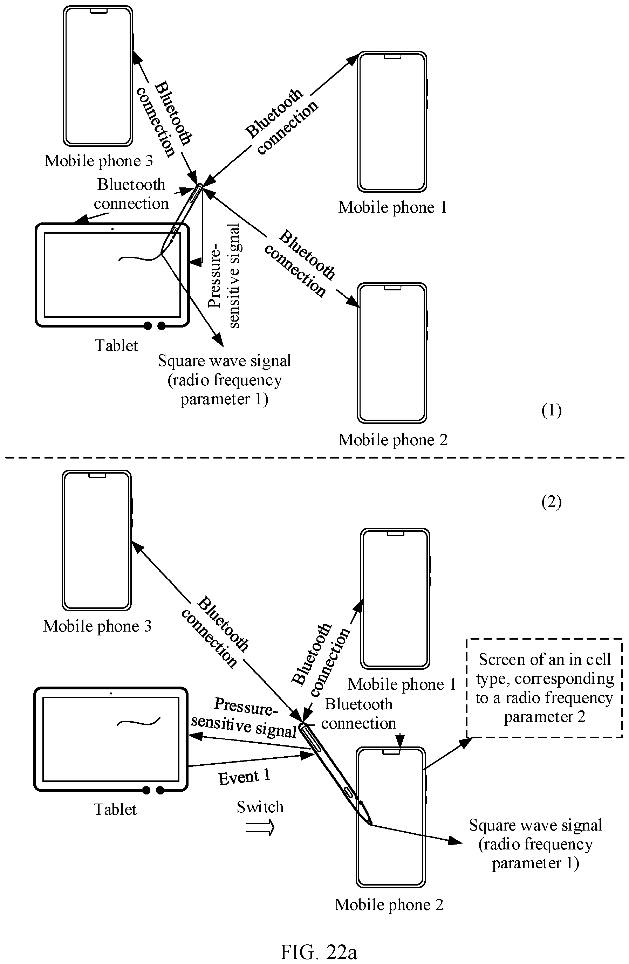

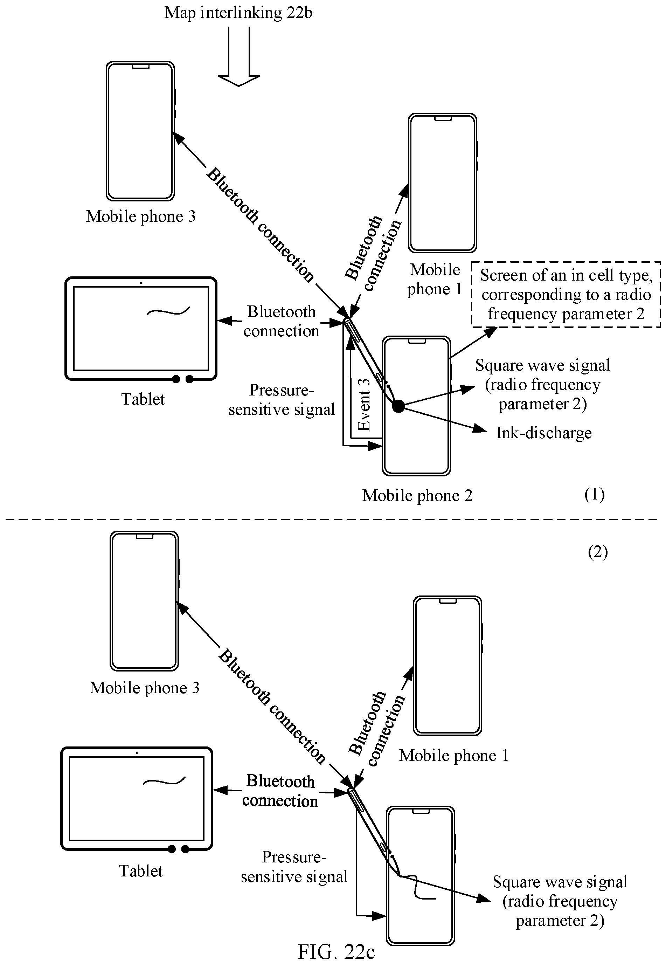

With reference to FIG. 9A and FIG. 9B, FIG. 22a to FIG. 22c each are a schematic flowchart of a stylus switching method according to an embodiment of this application. A specific procedure of switching the stylus from the tablet to the mobile phone 2 to write is described below with reference to (1) in FIG. 22a and (2) in FIG. 20a, FIG. 20b, and (1) in FIG. 22c and (2) in FIG. 22c.

Refer to (1) in FIG. 22a. For example, the stylus separately completes Bluetooth pairing with the tablet, the mobile phone 1, the mobile phone 2, and the mobile phone 3, and stores corresponding information (including correspondences between radio frequency parameters and Bluetooth channels, and for details, refer to the foregoing description) of the tablet, the mobile phone 1, the mobile phone 2, and the mobile phone 3. For example, the tablet is the last device that performs Bluetooth pairing with the stylus, that is, the tablet is a primary device of the stylus, and the mobile phone 1 to the mobile phone 3 may also be referred to as secondary devices (or slavery devices).

For example, a user holds the stylus to write on the tablet, the tablet may receive a pressure-sensitive signal from the stylus through an antenna of the tablet, and the tablet receives the square wave signal from the stylus via a TP sensor. For example, the frequencies of the square wave signals received by the tablet from the stylus are the frequency 1 (sent by an antenna 1 of the stylus) and the frequency 2 (sent by an antenna 2 of the stylus). The tablet displays a track on a screen based on the received pressure-sensitive signal and the received square wave signal. During this period, the stylus maintains Bluetooth connections to the tablet and the mobile phones.

Refer to (2) in FIG. 20a. For example, the user switches the stylus from the tablet to the mobile phone 2 to write. Specifically, when the user holds the stylus to write on the mobile phone 2, the stylus is in contact with a screen of the mobile phone 2. Because the stylus cannot perceive that writing is currently switched to the mobile phone, the stylus still sends the generated pressure-sensitive signal to the primary device (namely, the tablet).

For example, after receiving the pressure-sensitive signal, the tablet detects that no square wave signal is received. Correspondingly, the tablet sends event information to the stylus through the antenna of the tablet, where the event information includes an event 1 used to indicate that the tablet receives the pressure-sensitive signal and does not receive the square wave signal. The stylus may receive the event information from the tablet through a Bluetooth connection.

Still refer to (2) in FIG. 22a. For example, a TP sensor on the screen of the mobile phone 2 periodically sends a detection signal. After receiving the detection signal from the mobile phone 2 through the antenna, the stylus outputs the square wave signal in a specified timeslot through the antenna. Because the stylus does not sense the switching, the frequencies of the square wave signals output by the stylus are still the frequencies corresponding to the tablet, namely, the frequency 1 and the frequency 2, but the mobile phone 2 can receive the square wave signal with the frequency 2. Therefore, the TP sensor of the mobile phone 2 cannot receive the square wave signals (whose frequencies are the frequency 1 and the frequency 2) output by a nib of the stylus. Correspondingly, because the mobile phone 2 receives neither the pressure-sensitive signal nor the square wave signal, the mobile phone 2 does not report an event, and the stylus receives only the event 1 reported by the tablet.

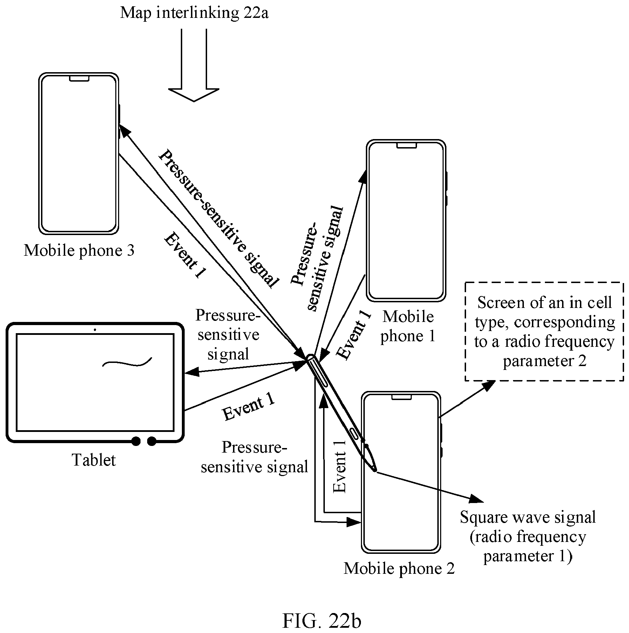

Refer to FIG. 22b. For example, after detecting the event 1, the stylus may determine, based on the stored correspondence between each Bluetooth connection channel and a radio frequency parameter, that radio frequency parameters corresponding to the two electronic devices (namely, the mobile phone 1 and the mobile phone 3) are consistent with those corresponding to the current primary device (namely, the tablet). The stylus separately sends, in the multicast manner, the pressure-sensitive signals to the tablet, the mobile phone 1, the mobile phone 2, and the mobile phone 3 (without waiting for 500 ms), and outputs the square wave signals (whose frequencies are the frequency 1 and the frequency 2) corresponding to the radio frequency parameters corresponding to the tablet.

Refer to FIG. 22b. For example, because the stylus currently writes on the mobile phone 2, and the mobile phone 2 cannot receive the square wave signal sent by the stylus (for a reason, refer to descriptions in Scenario 4 and Scenario 5), the tablet, the mobile phone 1, the mobile phone 2, and the mobile phone 3 all receive only the pressure-sensitive signal, and do not receive the square wave signal. Correspondingly, the tablet, the mobile phone 1, the mobile phone 2, and the mobile phone 3 separately report an event 1 to the stylus through respective antennas, to indicate that the pressure-sensitive signal is received and the square wave signal is not received.

Refer to (1) in FIG. 22c. For example, the stylus starts timing after receiving the event 1 sent by any electronic device. If an event 3 is not received within predetermined duration (500 ms), the stylus outputs, through the antenna according to a sequence of the recorded correspondences between the Bluetooth connection channels and the radio frequency parameters, the square wave signal (whose frequency is the frequency 3) corresponding to the radio frequency parameter corresponding to the mobile phone 2, and sends the pressure-sensitive signal to the mobile phone 2 on the Bluetooth connection channel between the mobile phone 2 and the stylus.

Still refer to (1) in FIG. 22c. For example, after receiving the pressure-sensitive signal and the square wave signal, the mobile phone 2 displays a track on a screen based on the pressure-sensitive signal and the square wave signal. In addition, the mobile phone 2 reports the event 3 to the stylus through an antenna of the mobile phone 2. As shown in (2) in FIG. 22c, after receiving the event 3, the stylus may determine that the primary device is switched to the mobile phone 2, send the subsequently obtained pressure-sensitive signal to the mobile phone 2, and output the square wave signal (with the frequency 3) corresponding to the radio frequency parameter corresponding to the mobile phone.

It should be noted that, unless otherwise specified, related content in Scenario 6 is the same as or similar to related content in Scenario 1, and details are not described herein again.

It should be further noted that types of devices in Scenario 1 to Scenario 6 are merely examples. In another embodiment, Scenario 5 is used as an example. The electronic devices in Scenario 5 may be a large screen (which may also be referred to as a smart screen), a mobile phone, and a notebook computer (a notebook computer with a touchscreen). For example, Scenario 5 may be a conference scenario. In a process in which the mobile phone performs projection to the large screen, according to the technical solution described Scenario 5, a user may switch the stylus between the large screen, the mobile phone, and the notebook computer to write.

In a possible implementation, after the stylus is switched from the tablet to the mobile phone, a prompt box may be displayed on the mobile phone to indicate that the stylus has switched to a current device (namely, the mobile phone).

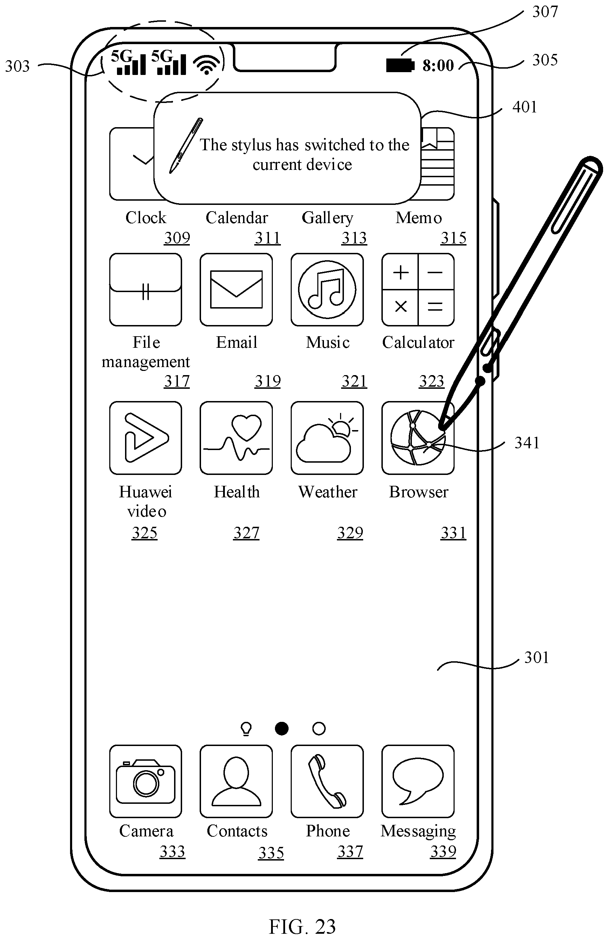

For example, FIG. 23 is a schematic diagram of a user interface. Refer to FIG. 23. A display window of a mobile phone displays one or more controls. For specific descriptions of the one or more controls, refer to FIG. 9A and FIG. 9B. Details are not described herein again. For example, a prompt box 401 may be displayed in an upper part (which may also be located in another position) of the display window of the mobile phone. Optionally, the prompt box 401 may display an icon of a stylus and a context "The stylus has switched to the current device" to remind a user that the stylus has switched to the mobile phone.

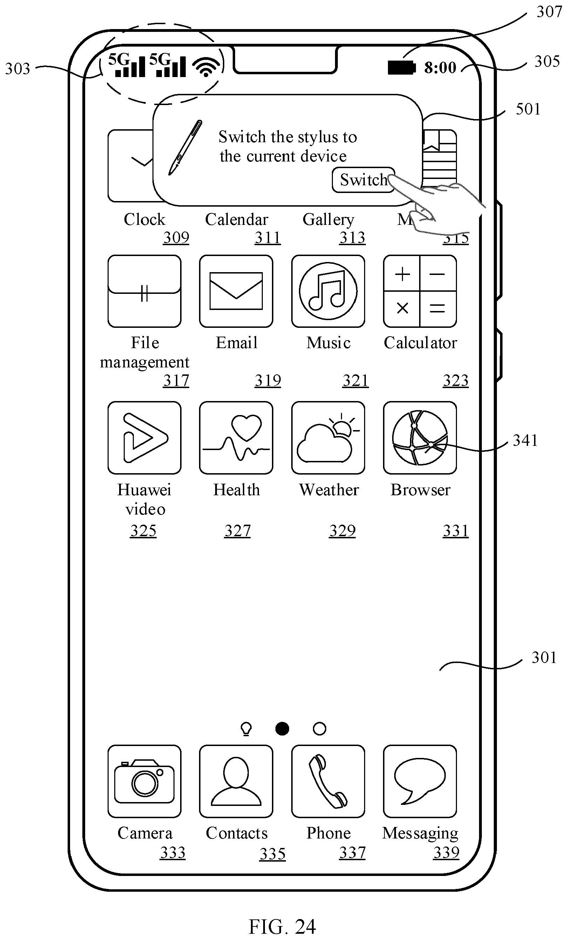

In another possible implementation, after the stylus is switched from the tablet to the mobile phone, refer to FIG. 24. A prompt box 501 may be displayed on the mobile phone. The prompt box 501 may provide a "Switch" option. The tablet detects that a user taps the " Switch" option, and may send switching event information to the stylus, to indicate a primary device of the stylus is always the tablet. In other words, even if the stylus writes on the mobile phone, all pressure-sensitive signals generated by the stylus are sent to the tablet. This implements a manual switching manner. Optionally, the user may slide the prompt box 501 leftwards (or rightwards, upwards, or the like), to cancel displaying of the prompt box 501.

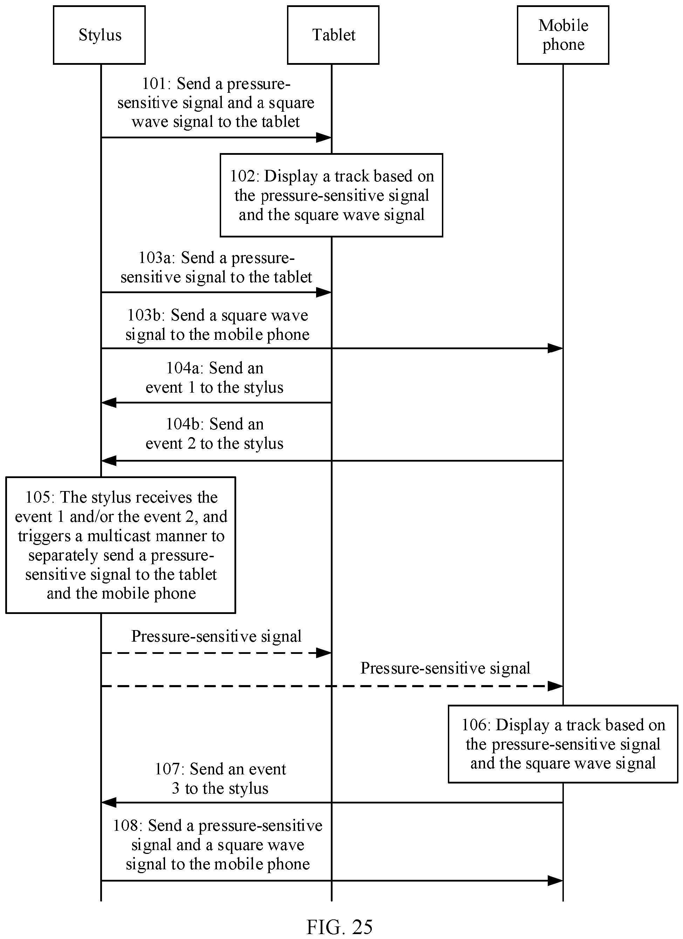

FIG. 25 is a schematic flowchart of a stylus switching method according to an embodiment of this application. As shown in FIG. 25, the method may include the following steps.

S 101: A stylus sends a pressure-sensitive signal and a square wave signal to a tablet.

S102: The tablet displays a track based on the pressure-sensitive signal and the square wave signal.

S103a: The stylus sends a pressure-sensitive signal to the tablet.

S103b: The stylus sends a square wave signal to a mobile phone.

S104a: The tablet sends an event 1 to the stylus.

S104b: The mobile phone sends an event 2 to the stylus.

S105: The stylus receives the event 1 and/or the event 2, and triggers a multicast manner to separately send a pressure-sensitive signal to the tablet and the mobile phone.

S106: The mobile phone displays a track based on the pressure-sensitive signal and the square wave signal.

S107: The mobile phone sends an event 3 to the stylus.

S108: The stylus sends a pressure-sensitive signal and a square wave signal to the mobile phone.

For specific content of S101 to S108, refer to the description in Scenario 1. Details are not described herein again.

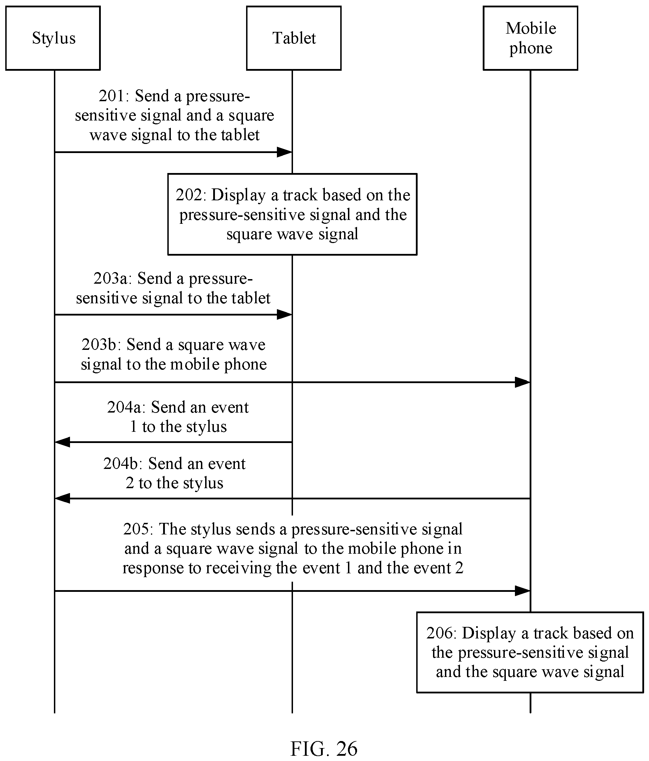

FIG. 26 is a schematic flowchart of a stylus switching method according to an embodiment of this application. As shown in FIG. 26, the method may include the following steps.

S201: A stylus sends a pressure-sensitive signal and a square wave signal to a tablet.

S202: The tablet displays a track based on the pressure-sensitive signal and the square wave signal.

S203a: The stylus sends a pressure-sensitive signal to the tablet.

S203b: The stylus sends a square wave signal to a mobile phone.

S204a: The tablet sends an event 1 to the stylus.

S204b: The mobile phone sends an event 2 to the stylus.

S205: The stylus sends a pressure-sensitive signal and a square wave signal to the mobile phone in response to receiving the event 1 and the event 2.

S206: The mobile phone displays a track based on the pressure-sensitive signal and the square wave signal.

For specific content of S201 to S206, refer to the description in Scenario 3. Details are not described herein again.

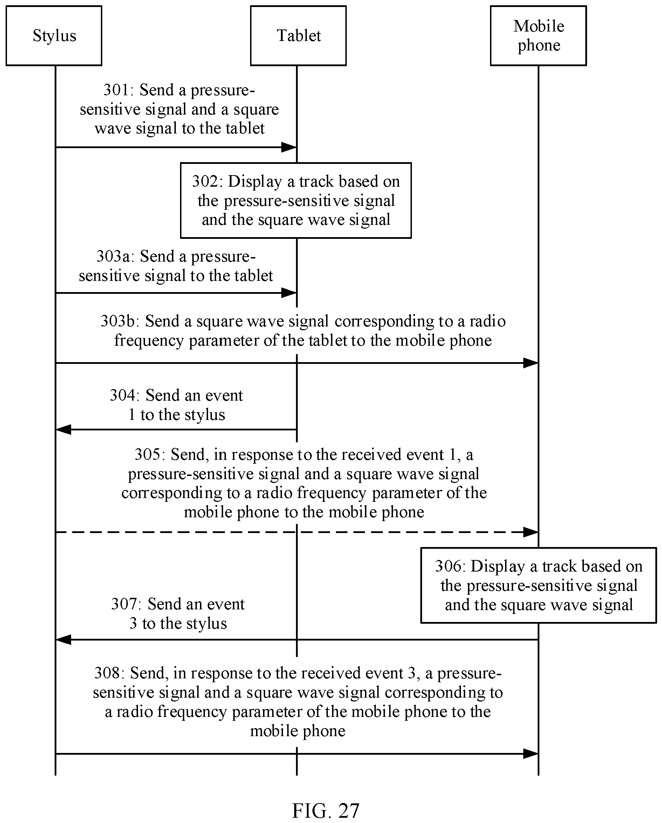

FIG. 27 is a schematic flowchart of a stylus switching method according to an embodiment of this application. As shown in FIG. 27, the method may include the following steps.

S301: A stylus sends a pressure-sensitive signal and a square wave signal to a tablet.

S302: The tablet displays a track based on the pressure-sensitive signal and the square wave signal.

S303a: The stylus sends a pressure-sensitive signal to the tablet.

S303b: The stylus sends a square wave signal corresponding to a radio frequency parameter of the tablet to a mobile phone.

S304: The tablet sends an event 1 to the stylus.

S305: The stylus sends, in response to the received event 1, a pressure-sensitive signal and a square wave signal corresponding to a radio frequency parameter of the mobile phone to the mobile phone.

S306: The mobile phone displays a track based on the pressure-sensitive signal and the square wave signal.

S307: The mobile phone sends an event 3 to the stylus.

S308: The stylus sends, in response to the received event 3, a pressure-sensitive signal and a square wave signal corresponding to a radio frequency parameter of the mobile phone to the mobile phone.

For specific content of S301 to S308, refer to the description in Scenario 4. Details are not described herein again.

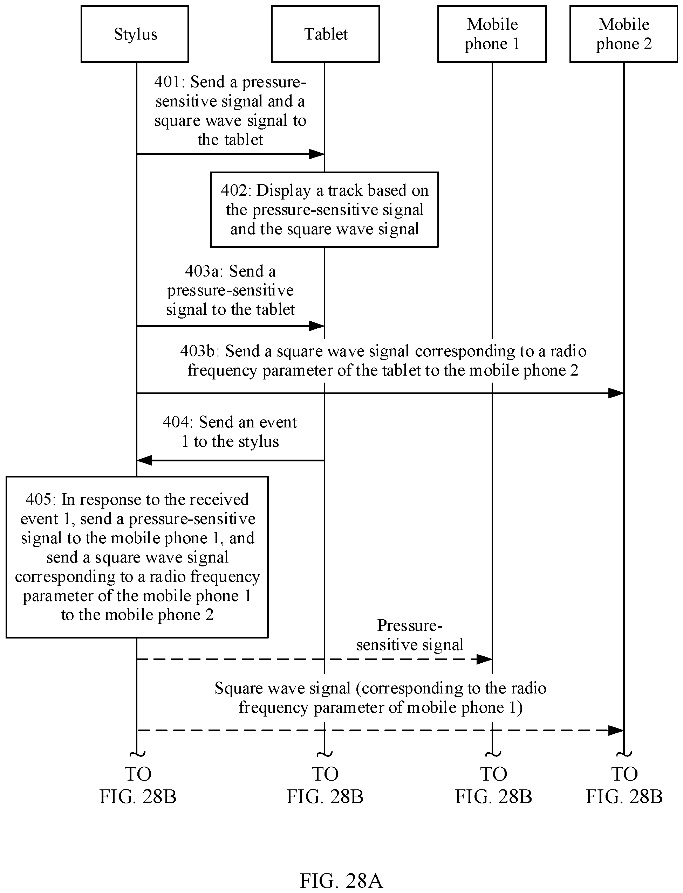

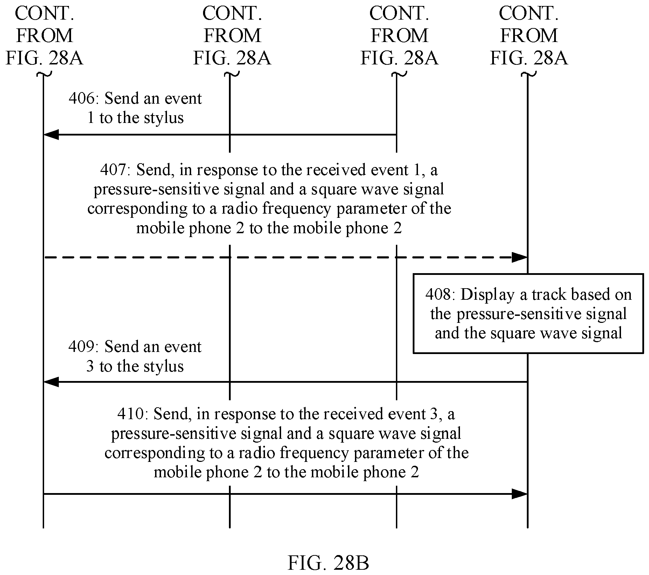

FIG. 28A and FIG. 28B are a schematic flowchart of a stylus switching method according to an embodiment of this application. As shown in FIG. 28A and FIG. 28B, the method may include the following steps.

S401: A stylus sends a pressure-sensitive signal and a square wave signal to a tablet.

S402: The tablet displays a track based on the pressure-sensitive signal and the square wave signal.

S403a: The stylus sends a pressure-sensitive signal to the tablet.

S403b: The stylus sends a square wave signal corresponding to a radio frequency parameter of the tablet to a mobile phone 2.

S404: The tablet sends an event 1 to the stylus.

S405: In response to the received event 1, the stylus sends a pressure-sensitive signal to a mobile phone 1, and sends a square wave signal corresponding to a radio frequency parameter of the mobile phone 1 to the mobile phone 2. S406: The mobile phone 1 sends an event 1 to the stylus.

S407: The stylus sends, in response to the received event 1, a pressure-sensitive signal and a square wave signal corresponding to a radio frequency parameter of the mobile phone 2 to the mobile phone 2.

S408: The mobile phone 2 displays a track based on the pressure-sensitive signal and the square wave signal.

S409: The mobile phone 2 sends an event 3 to the stylus.

S410: The stylus sends, in response to the received event 3, a pressure-sensitive signal and a square wave signal corresponding to the radio frequency parameter of the mobile phone 2 to the mobile phone 2.

For specific content of S401 to S410, refer to the description in Scenario 5. Details are not described herein again.

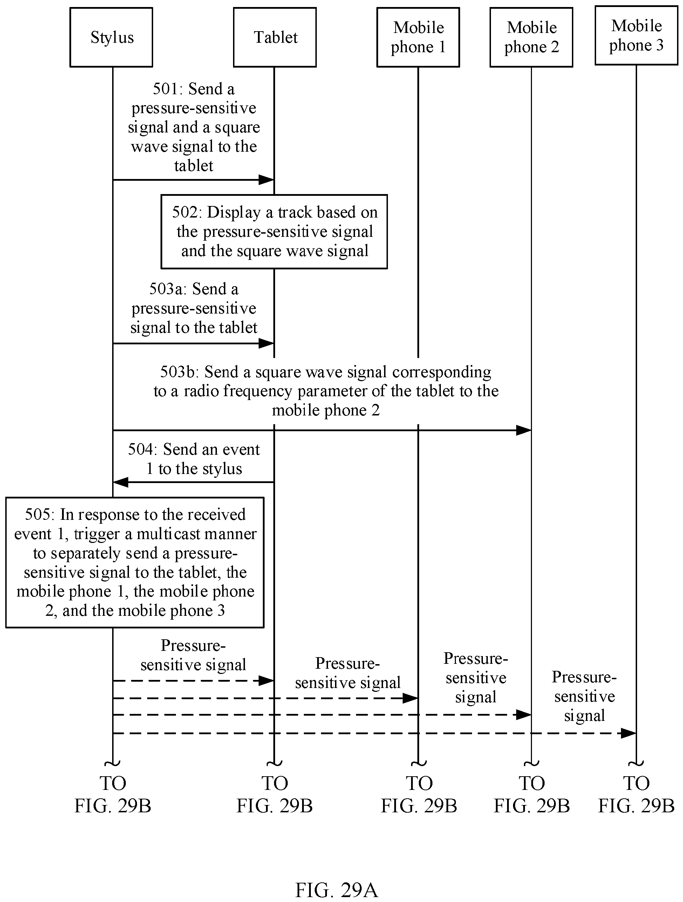

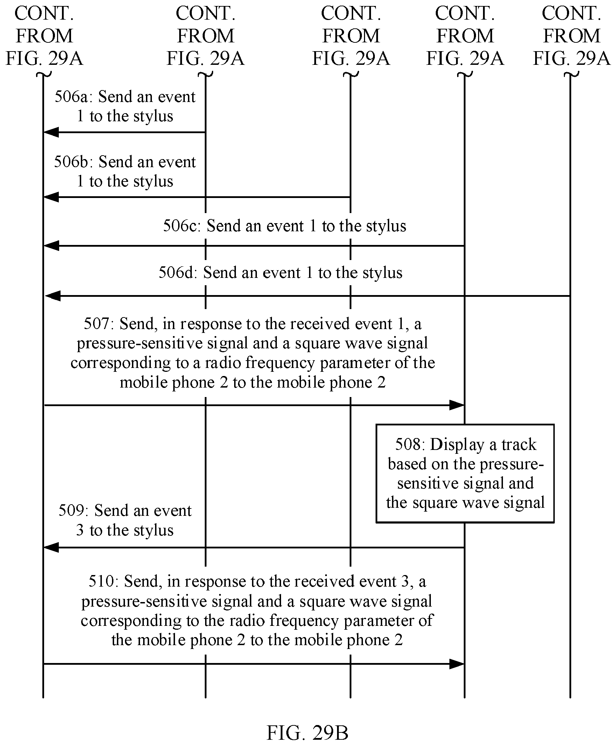

FIG. 29A and FIG. 29B are a schematic flowchart of a stylus switching method according to an embodiment of this application. As shown in FIG. 29A and FIG. 29B, the method may include the following steps.

S501: A stylus sends a pressure-sensitive signal and a square wave signal to a tablet.

S502: The tablet displays a track based on the pressure-sensitive signal and the square wave signal.

S503a: The stylus sends a pressure-sensitive signal to the tablet.

S503b: The stylus sends a square wave signal corresponding to a radio frequency parameter of the tablet to a mobile phone 2.

S504: The tablet sends an event 1 to the stylus.

S505: In response to the received event 1, the stylus triggers a multicast manner to separately send a pressure-sensitive signal to the tablet, a mobile phone 1, the mobile phone 2, and a mobile phone 3.

S506a: The tablet sends an event 1 to the stylus.

S506b: The mobile phone 1 sends an event 1 to the stylus.

S506c: The mobile phone 2 sends an event 1 to the stylus.

S506d: The mobile phone 3 sends an event 1 to the stylus.

S507: The stylus sends, in response to the received event 1, a pressure-sensitive signal and a square wave signal corresponding to a radio frequency parameter of the mobile phone 2 to the mobile phone 2.

S508: The mobile phone 2 displays a track based on the pressure-sensitive signal and the square wave signal.

S509: The mobile phone 2 sends an event 3 to the stylus.

S510: The stylus sends, in response to the received event 3, a pressure-sensitive signal and a square wave signal corresponding to a radio frequency parameter of the mobile phone 2 to the mobile phone 2.

For specific content of S501 to S5 10, refer to descriptions in Scenario 6. Details are not described herein again.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A stylus switching system, comprising a first electronic device, a second electronic device, and a stylus, wherein the stylus is connected to the first electronic device through Bluetooth, and the stylus is connected to the second electronic device through Bluetooth;
the first electronic device is configured to:
receive first radio frequency information and first pressure-sensitive information sent by the stylus, wherein the first radio frequency information and the first pressure-sensitive information are generated when the stylus is in contact with a screen of the first electronic device; and
display a first track based on the first radio frequency information and the first pressure-sensitive information;
the second electronic device is configured to:
receive second radio frequency information sent by the stylus, wherein the second radio frequency information is generated when the stylus is in contact with a screen of the second electronic device;
the first electronic device is configured to:
receive second pressure-sensitive information sent by the stylus, wherein the second pressure-sensitive information is generated when the stylus is in contact with the screen of the second electronic device;
the stylus is configured to:
send the second pressure-sensitive information to the second electronic device; and
the second electronic device is configured to:
display a second track based on the second radio frequency information and the second pressure-sensitive information.

2. The system according to claim 1, wherein
the first electronic device is further configured to:
send first event information to the stylus in response to the received second pressure-sensitive information, wherein the first event information indicates that a transmitting end of the first event information receives the second pressure-sensitive information, and does not receive radio frequency information sent by the stylus;
the second electronic device is further configured to:
send second event information to the stylus in response to the received second radio frequency information, wherein the second event information indicates that a transmitting end of the second event information receives the second radio frequency information, and does not receive pressure-sensitive information sent by the stylus;
the stylus is further configured to:
send the second pressure-sensitive information to the first electronic device and the second electronic device in response to either of the received first event information and the received second event information;
the second electronic device is further configured to:
in response to the received second pressure-sensitive information and the received second radio frequency information, display the second track, and send third event information to the stylus, wherein the third event information indicates that a transmitting end of the third event information receives the second pressure-sensitive information and the second radio frequency information; and
the stylus is further configured to:
send the second pressure-sensitive information and the second radio frequency information only to the second electronic device in response to the received third event information.

3. The system according to claim 2, wherein the stylus is further configured to:
if the stylus does not receive the third event information within specified duration after sending the second pressure-sensitive information to the first electronic device and the second electronic device, stop sending the second pressure-sensitive information to the first electronic device and the second electronic device.

4. The system according to claim 1, wherein
the first electronic device is further configured to:
send first event information to the stylus in response to the received second pressure-sensitive information, wherein the first event information indicates that a transmitting end of the first event information receives the second pressure-sensitive information, and does not receive radio frequency information sent by the stylus;
the second electronic device is further configured to:
send second event information to the stylus in response to the received second radio frequency information, wherein the second event information indicates that a transmitting end of the second event information receives the second radio frequency information, and does not receive pressure-sensitive information sent by the stylus; and
the stylus is further configured to:
send the second pressure-sensitive information to the second electronic device in response to the received first event information and the received second event information.

5. The system according to claim 1, wherein a first radio frequency parameter corresponding to the first radio frequency information is the same as a second radio frequency parameter corresponding to the second radio frequency information.

6. The system according to claim 1, wherein a first radio frequency parameter corresponding to the first radio frequency information is different from a second radio frequency parameter corresponding to the second radio frequency information.

7. The system according to claim 6, wherein the screen of the first electronic device is a screen of an on cell type, and the screen of the second electronic device is a screen of an in cell type.

8. The system according to any one of claims 5 to 7, wherein the first radio frequency parameter comprises at least one of the following:
a working frequency of a first radio frequency signal carrying the first radio frequency information, a sending moment of the first radio frequency signal, and sending duration of the first radio frequency signal; and
the second radio frequency parameter comprises at least one of the following:
a working frequency of a second radio frequency signal carrying the second radio frequency information, a sending moment of the second radio frequency signal, and sending duration of the second radio frequency signal.

9. The system according to claim 1, wherein the first electronic device is further configured to:
display a first prompt box, wherein the first prompt box comprises a first option;
obtain a first user instruction, wherein the first user instruction is obtained by the first electronic device after the first electronic device detects that a user taps the first option; and
send instruction information to the stylus in response to the first user instruction, so as to instruct the stylus to switch to the first electronic device; and
the stylus is further configured to:
send the second pressure-sensitive information to the first electronic device in response to the received instruction information.

10. The system according to claim 1, wherein the second electronic device is configured to:
display a second prompt box, wherein the second prompt box comprises prompt information, and the prompt information is used to notify that the stylus has switched to the second electronic device.

11. The system according to claim 1, wherein the first electronic device and the second electronic device have a same account.

12. A stylus switching method, comprising:
receiving, by a first electronic device, first radio frequency information and first pressure-sensitive information sent by a stylus, wherein the first radio frequency information and the first pressure-sensitive information are generated when the stylus is in contact with a screen of the first electronic device;
displaying, by the first electronic device, a first track based on the first radio frequency information and the first pressure-sensitive information;
receiving, by a second electronic device, second radio frequency information sent by the stylus, wherein the second radio frequency information is generated when the stylus is in contact with a screen of the second electronic device;
receiving, by the first electronic device, second pressure-sensitive information sent by the stylus, wherein the second pressure-sensitive information is generated when the stylus is in contact with the screen of the second electronic device;
sending, by the stylus, the second pressure-sensitive information to the second electronic device; and
displaying, by the second electronic device, a second track based on the second radio frequency information and the second pressure-sensitive information.

13. The method according to claim 12, wherein the method comprises:
sending, by the first electronic device, first event information to the stylus in response to the received second pressure-sensitive information, wherein the first event information indicates that a transmitting end of the first event information receives the second pressure-sensitive information, and does not receive radio frequency information sent by the stylus;
sending, by the second electronic device, second event information to the stylus in response to the received second radio frequency information, wherein the second event information indicates that a transmitting end of the second event information receives the second radio frequency information, and does not receive pressure-sensitive information sent by the stylus;
sending, by the stylus, the second pressure-sensitive information to the first electronic device and the second electronic device in response to either of the received first event information and the received second event information;
in response to the received second pressure-sensitive information and the received second radio frequency information, displaying, by the second electronic device, the second track, and sending third event information to the stylus, wherein the third event information indicates that a transmitting end of the third event information receives the second pressure-sensitive information and the second radio frequency information; and
sending, by the stylus, the second pressure-sensitive information and the second radio frequency information only to the second electronic device in response to the received third event information.

14. The method according to claim 13, wherein the method further comprises:
if the stylus does not receive the third event information within specified duration after sending the second pressure-sensitive information to the first electronic device and the second electronic device, stopping sending, by the stylus, the second pressure-sensitive information to the first electronic device and the second electronic device.

15. The method according to claim 12, wherein the method comprises:
sending, by the first electronic device, first event information to the stylus in response to the received second pressure-sensitive information, wherein the first event information indicates that a transmitting end of the first event information receives the second pressure-sensitive information, and does not receive radio frequency information sent by the stylus;
sending, by the second electronic device, second event information to the stylus in response to the received second radio frequency information, wherein the second event information indicates that a transmitting end of the second event information receives the second radio frequency information, and does not receive pressure-sensitive information sent by the stylus; and
sending, by the stylus, the second pressure-sensitive information to the second electronic device in response to the received first event information and the received second event information.

16. The method according to claim 12, wherein a first radio frequency parameter corresponding to the first radio frequency information is the same as a second radio frequency parameter corresponding to the second radio frequency information.

17. The method according to claim 12, wherein a first radio frequency parameter corresponding to the first radio frequency information is different from a second radio frequency parameter corresponding to the second radio frequency information.

18. The method according to claim 17, wherein the screen of the first electronic device is a screen of an on cell type, and the screen of the second electronic device is a screen of an in cell type.

19. The method according to any one of claims 16 to 18, wherein the first radio frequency parameter comprises at least one of the following:
a working frequency of a first radio frequency signal carrying the first radio frequency information, a sending moment of the first radio frequency signal, and sending duration of the first radio frequency signal; and
the second radio frequency parameter comprises at least one of the following:
a working frequency of a second radio frequency signal carrying the second radio frequency information, a sending moment of the second radio frequency signal, and sending duration of the second radio frequency signal.

20. The method according to claim 12, wherein the method further comprises:
displaying, by the first electronic device, a first prompt box, wherein the first prompt box comprises a first option;
obtaining, by the first electronic device, a first user instruction, wherein the first user instruction is obtained by the first electronic device after the first electronic device detects that a user taps the first option;
sending, by the first electronic device, instruction information to the stylus in response to the first user instruction, so as to instruct the stylus to switch to the first electronic device; and
sending, by the stylus, the second pressure-sensitive information to the first electronic device in response to the received instruction information.

21. The method according to claim 12, wherein the method further comprises:
displaying, by the second electronic device, a second prompt box, wherein the second prompt box comprises prompt information, and the prompt information is used to notify that the stylus has switched to the second electronic device.

22. The method according to claim 12, wherein the first electronic device and the second electronic device have a same account.

23. A stylus switching method, comprising:
sending first radio frequency information and first pressure-sensitive information to a first electronic device, wherein the first radio frequency information and the first pressure-sensitive information are generated when a stylus is in contact with a screen of the first electronic device;
sending second radio frequency information to a second electronic device, wherein the second radio frequency information is generated when the stylus is in contact with a screen of the second electronic device;
sending second pressure-sensitive information to the first electronic device, wherein the second pressure-sensitive information is generated when the stylus is in contact with the screen of the second electronic device;
if either first event information or second event information is received, sending the second pressure-sensitive information to the first electronic device and the second electronic device, wherein the first event information is sent by the first electronic device based on the received second pressure-sensitive information, and the second event information is sent by the second electronic device based on the received second radio frequency information;
receiving third event information sent by the second electronic device, wherein the third event information is sent by the second electronic device based on the received second pressure-sensitive information and the received second radio frequency information; and
sending the second pressure-sensitive information and the second radio frequency information only to the second electronic device based on the third event information.

24. The method according to claim 23, wherein the method further comprises:
if the third event information is not received within specified duration after the second pressure-sensitive information is sent to the first electronic device and the second electronic device, stopping sending the second pressure-sensitive information to the first electronic device and the second electronic device.

25. The method according to claim 23, wherein a first radio frequency parameter corresponding to the first radio frequency information is the same as a second radio frequency parameter corresponding to the second radio frequency information.

26. The method according to claim 25, wherein the first radio frequency parameter comprises at least one of the following:
a working frequency of a first radio frequency signal carrying the first radio frequency information, a sending moment of the first radio frequency signal, and sending duration of the first radio frequency signal; and
the second radio frequency parameter comprises at least one of the following:
a working frequency of a second radio frequency signal carrying the second radio frequency information, a sending moment of the second radio frequency signal, and sending duration of the second radio frequency signal.

27. The method according to claim 23, wherein the method further comprises:
receiving instruction information sent by the first electronic device, wherein the instruction information instructs to switch to the first electronic device; and
sending the second pressure-sensitive information to the first electronic device in response to the received instruction information.

28. A stylus, comprising:
a memory and a processor, wherein
the processor is coupled to the memory; and
the memory stores program instructions, and when the program instructions are executed by the processor, the stylus is enabled to perform the stylus switching method according to any one of claims 23 to 27.
